# EUROPEAN PATENT SPECIFICATION

(11) **EP 4 526 026 B1**
(45) Date of publication and mention of the grant of the patent: **12.11.2025**
(21) Application number: 23765543.6
(22) Date of filing: 12.09.2023
(51) Int. Cl.: B01F 25/23, B01F 35/00, B01J 19/26

(54) **DISPOSABLE REACTOR FOR MIXING TWO LIQUIDS**
EINWEGREAKTOR ZUM MISCHEN ZWEIER FLÜSSIGKEITEN
RÉACTEUR JETABLE POUR LE MÉLANGE DE DEUX LIQUIDES

(30) Priority: 12.09.2022 EP 22195145; 21.03.2023 EP 23163257
(43) Date of publication of application: 26.03.2025
(73) Proprietor: leon-nanodrugs GmbH, 82152 Planegg (DE)
(72) Inventor: STIENEKER, Frank, 82152 Planegg (DE); ERHARD, Martin, 82152 Planegg (DE); LOWNDES, Charlie, Cambridge CB10 1SX (GB); HARVEY, Oliver, Cambridge CB10 1SX (GB)
(74) Representative: Synergy IP Group AG
(86) International application number: PCT/EP2023/075054
(87) International publication number: WO 2024/056683

(56) References cited:
- WO-A1-2021/252715
- WO-A2-2006/005401
- US-A1- 2009 269 250
- US-A1- 2014 044 847
- US-A1- 2016 187 764
- US-A1- 2017 361 299

## Description

### BACKGROUND OF THE INVENTION

Jet impingement reactors are fluid reactors for mixing fluids or for generating particulate fluids by collision. They can, for example, be used for the production of nanoparticle fluids incorporating poorly water-soluble active ingredients. The function of these reactors is based on the use of two fluid streams, at least one of which typically contains the active ingredient, that are injected into a reactor cavity and collide at a turbulent mixing zone, thereby creating the nanoparticles. One of the main principles used in connection with the jet impingement reactors is the solvent/non-solvent precipitation in which a first fluid comprising the active ingredient dissolved in a suitable solvent is contacted with a non-solvent or antisolvent under defined conditions results in the precipitation of the nanoparticles containing the active ingredient. In case one of the solvents contains a lipid, lipid nanoparticles can be produced with help of the jet impingement reactors which may, for example, be subsequently loaded with a biologically active compound, e.g., by pH shift.

Jet impingement reactors comprise a reaction chamber having two fluid inlets with nozzles that allow the two fluids to be injected into the reaction chamber with a pressure that is typically higher than ambient pressure. Through the first and the second fluid inlet, two streams are injected such as to meet inside the reaction chamber and form the collision or mixing zone. An outlet for obtaining the resulting nanoparticle suspension is also provided.

One example for a jet impingement reactor is the microjet reactor as disclosed in EP 1165224 B1. Such a microjet reactor has at least two nozzles or pinholes located opposite one another, each with an associated pump and feed line for directing a liquid towards a common collision point in a reaction chamber enclosed by a reactor housing, which has a metallic body. The reaction chamber comprises two bores that cross each other and yield in a small cavity in which two fluids collide, possibly without contacting the walls of this cavity. While one of the bores accommodates the two fluid inlets, the second bore accommodates a further opening in the reactor housing through which a gas, an evaporating liquid, a cooling liquid, or a cooling gas can be introduced to maintain the gas atmosphere in the reaction chamber or for cooling. A further opening at the other end of the second bore is provided for removing the resulting products and excess gas from the reactor. This reactor furthermore requires as a third fluid an external source of a gas or cooling liquid, and so may be more complex and less straightforward for producing particles under aseptic conditions. The reactor or reactor housing is also made of metal, so specific processes for its manufacture, assembly, as well as cleaning between use would be required.

Another example for a jet impingement reactor is disclosed in WO 2021/252715 A1. The reactors described in WO 2021/252715 A1 are axisymmetric devices comprising an axisymmetric mixing chamber with a spherical shaped wall, with a first and a second fluid inlet aligned on an axis of symmetry allowing for the flow of a first and a second fluid into the mixing chamber, via a first and a second fluid conduits, so as to form a third resultant fluid; and fluid outlets tubing aligned either along the same axis of symmetry as the inlets or in an annular arrangement in relation to the inlets allowing for the flow of said third fluid from the reaction chamber. A device is described in which the mixing chamber can be assembled from two halves, or two pieces, wherein the axes of the inlets and outlets are perpendicular to the midplane of the mixing chamber. The two halves are affixable together with additional fastening means.

WO 2018/234217 A1 discloses another jet impingement reactor having a housing which encloses a reaction chamber, a first fluid nozzle and a second fluid nozzle oriented in a collinear manner. The second nozzle is located directly opposite the first fluid nozzle in the jet direction of the nozzles. The nozzles reach into the reaction chamber and form a collision zone in form of a disk between each other. This reactor type has at least one rinsing fluid inlet arranged on the side of the first fluid nozzle and at least one product outlet arranged on the side of the second fluid nozzle and can be used for continuous preparation of the particulate fluids. Additionally, rinsing fluid-conducting structures are designed as parallel channels on a side of the first fluid nozzle that produce a rinsing fluid flow directed in the jet direction of the first fluid nozzle and that lead the rinsing fluid in the direction of the collision disk causing a slight deformation of the collision disk. This causes the particles present in the formed nanoparticulate fluid of the collision disk to be conveyed away from the collision zone. The production process, when carried out in the reactor as disclosed in WO 2018/234217 A1 depends on the presence of the rinsing fluid-conducting structures and of a rinsing fluid, also adding complexity, cost, and required time in terms in manufacture of the reactor itself, as well as cleaning between use, especially where the use is intended for aseptic manufacture of nanoparticles, making fast and small batch production more difficult. The quality and reproducibility of the resulting nanoparticle fluids depend, among others, on the protocol for the method of production as well on the precision of the reactor. The protocol of the method can define different parameters, like e.g. the volume flow rate of the fluid streams that are injected though the nozzles, the ratio of these flow rates, the concentration of the ingredients dissolved in the streams, or the temperature settings. These parameters can also be influenced by the reactor itself. The nozzle size, for example, has an influence on the flow rate of streams since its diameter allows only a certain amount of fluid passing the nozzle, depending on the respective pressure of the stream. The appropriate adaptation of the parameters for production of the nanoparticles and the choice of the appropriate reactor is always a challenge in product and process development or in upscaling processes.

It is also known that the particle size distribution as well as the reproducibility of the results depends on the accurate setup of the reactor, in particular of the nozzles, and on the precise control of the fluid streams. For achieving further improvements with respect to the products' particle size, particle size distribution or other quality parameters, improved jet impingement reactors that allow better control of the process parameters are needed.

Thus, there is a need for jet impingement reactors that not only can be used to produce nanoparticles with desirable particle size distributions, morphology and that reduce the risk of undesirable side reactions, but which allows for efficient and rapid small-batch manufacture, in particular in the form of ready-to-use, or sterilizable disposable hardware which reduces the need for sterilization or complex cleaning protocols between batch productions, and which may allow for increased production efficiency. Another object is to provide jet impingement reactors which may be easily manufactured in a cost-efficient and reproducible method. A further object is to overcome one or more disadvantages of jet impingement reactors and related methods proposed in the prior art. These needs and objects are addressed by the invention disclosed herein.

### SUMMARY OF THE INVENTION

In a first aspect, the present disclosure relates to a jet impingement reactor (1) comprising a reaction chamber (2), said chamber having a substantially spherical shape, wherein the spherical shape is interrupted by (a) a first (3) and a second (4) fluid inlet, wherein the first (3) and the second (4) fluid inlet are arranged at opposite positions on a first central axis (x) of the reaction chamber (2) such as to point at one another, and wherein each of the first (3) and the second (4) fluid inlet is provided by a nozzle (5); and (b) a fluid outlet (6) arranged at a position located on a second central axis (y) of said chamber (2), the second central axis (y) being perpendicular to the first central axis (x). The reactor (1) further comprises a first (7), a second (8) and a third (9) fluid conduit, wherein the first (7) and the second (8) fluid conduit are arranged for conducting a first fluid to the first fluid inlet (3) and a second fluid to the second fluid inlet (4), and wherein the third fluid conduit (9) is arranged for conducting a third fluid from the fluid outlet (6) in a downstream direction, the third fluid being formed by the mixture or reaction of the first and the second fluid in the reaction chamber (2). The reactor (1) is further characterised in that it comprises at least two pieces that are affixed to each other, of which a first piece (121, 171, 181) is made of a polymeric material and comprises at least a portion of the first (7) or the second (8) fluid conduit and at least a hemispherical portion of the reaction chamber (2); and a second piece (132, 172, 182) which is at least partially insertable into the first piece (121, 171, 181), the second piece comprising the fluid outlet (6).

### BRIEF DESCRIPTION OF THE DRAWINGS

Figure 1 shows a cross-sectional view of an embodiment of a first piece (121) of a jet impingement reactor.
Figure 2 shows a cross-sectional view of an embodiment of a second piece (132) of a jet impingement reactor designed to match the first piece (121) shown in Figure 1, and to be insertable in the first void (21) of the first piece (121).
Figure 3 shows a cross-sectional view of an embodiment of a connecting piece (33) designed to be used together with the first piece (121) shown in Figure 1.
Figure 4 shows a cross-sectional view of an embodiment of a jet impingement reactor (1) comprising the first piece (121) shown in Figure 12 together with the second piece (132) of Figure 2 and two connecting pieces (33) as shown in Figure 3.
Figure 5 shows a cross-sectional view of a specific embodiment of a substantially spherical reaction chamber (2) formed by a first piece (121) and an at least partially inserted second piece (132); only part of the first piece (121) and the second piece (132) are depicted.
Figure 6 shows a cross-sectional view of an embodiment of a first piece (171) of a jet impingement reactor.
Figure 7 shows a cross-sectional view of an embodiment of a jet impingement reactor (1) comprising the first piece (171) shown in Figure 6 together with the second piece (172) and two connecting pieces (73).
Figure 8 shows a cross-sectional view of another embodiment of a jet impingement reactor (1), not drawn to scale, comprising a first piece (181) affixed together with a second piece (182) and two connecting pieces (83).
Figure 9 shows a cross-sectional enlarged view of a specific embodiment of a substantially spherical reaction chamber (2), formed by a first piece (181) and a partially or fully inserted second piece (182); only part of the first (181) and the second piece (182) are depicted.
Figure 10 shows a cross-sectional and perspective view (A) of the first piece (181) alongside a cross-sectional and perspective view (B) of the first piece (181) affixed to the second piece (182).
Figure 11 shows a graphical depiction of the particle sizes (avg. diameter (nm), graph A) and a graphical depiction of polydispersity index (PDI, graph B) characterized for the PLGA nanoparticles obtained using polymeric jet impingement reactors (A, B, and C) according to the invention and obtained using a comparative stainless-steel reactor (M), as described in Example 1.
Figure 12 shows a graphical depiction of the particle sizes (avg. diameter (nm), graph A) and polydispersity index (PDI, graph B) characterized for the liposomal nanoparticles obtained as described in Example 2 using polymeric reactors (A, B, and C) according to the invention and obtained using a comparative stainless-steel reactor (M).
Figure 13 depicts a cross-sectional view of an example of an alternative example of a jet impingement reactor (1) comprising a housing (10) made of a polymeric material, the housing consisting of two pieces (11, 12) that are affixed to each other.
Figure 14 depicts a perspective view of the second piece of housing (12) of the housing (10) of the jet impingement reactor (1) as shown in Figure 13.
Figure 15 depicts a perspective view of the first piece of housing (11) of the housing (10) of the jet impingement reactor (1) as shown in Figure 13.
Figure 16 depicts a cross-sectional view of another alternative example of a jet impingement reactor (1) comprising a housing (40), the housing consisting of two pieces (41, 42) that are affixed to each other.
Figure 17 depicts a perspective and cross-sectional view of the first housing piece (41) of the housing (40) as shown in Figure 16.
Figure 18 depicts a cross-sectional view of the first housing piece (42) of the housing (40) as shown in Figure 16.
Figure 19 depicts a perspective view of the second housing piece (42) of the housing (40) as shown in Figure 16.
Figure 20 depicts a cross-sectional view of yet another example of an alternative jet impingement reactor (1) comprising a housing (80), the housing consisting of two pieces (81, 82) that are affixed to each other.
Figure 21 depicts a perspective and cross-sectional view of the first housing piece (81) of the housing (80) as shown in Figure 20.
Figure 22 depicts a cross-sectional view of the second housing piece (82) of the housing (80) as shown in Figure 20.
Figure 23 depicts a perspective view of the second housing piece (82) of the housing (80) as shown in Figure 20.

### DETAILED DESCRIPTION OF THE INVENTION

According to a first aspect of the invention, a jet impingement reactor is provided which comprises a reaction chamber which has a substantially spherical shape, the spherical shape being interrupted by (a) a first and a second fluid inlet, and (b) a fluid outlet The first and the second fluid inlet are arranged at opposite positions on a first central axis of the reaction chamber such as to point at one another, and each of the first and the second fluid inlet is provided by a nozzle. The fluid outlet is arranged at a position located on a second central axis of the reaction chamber (6) which is perpendicular to the first central axis. The reactor further comprises a first, a second and a third fluid conduit, of which the first and the second fluid conduit are arranged for conducting a first fluid to the first fluid inlet and a second fluid to the second fluid inlet, and wherein the third fluid conduit is arranged for conducting a third fluid from the fluid outlet in a downstream direction, the third fluid being formed by the mixture or reaction of the first and the second fluid in the reaction chamber. Moreover, the reactor comprises at least two pieces that are affixed to each other: a first piece which is made of a polymeric material and comprises at least a portion of the first or the second fluid conduit and at least a hemispherical portion of the reaction chamber; and a second piece which is at least partially insertable into the first piece, the second piece comprising the fluid outlet. Optionally, the second piece is also made of a polymeric material.

This reactor, assembled from at least two pieces affixed to one another is especially useful as a disposable reactor for aseptically manufacturing small batches of a liquid composition from at least two liquid substrates. The inventors have found that preparing the reactor from two pieces as described herein allows the use of highly efficient manufacturing processes such as injection moulding for at least the first piece of the reactor and potentially also for the second piece if that is also made of a polymeric material. Alternative methods of making a reactor with a substantially spherical reaction chamber would require special tooling and be less efficient Moreover, the design of a reactor assembled from at least two potentially mouldable pieces as disclosed herein enables the reactor to be equipped with nozzles with a particularly high degree of precision with respect to the position and orientation of the nozzles and potentially also with respect to the dimensions of the first and the second fluid inlet provided by the nozzles. Another advantage is versatility: For example, reactors with various different fluid inlet sizes can be manufactured using one and the same molding tool for the first piece and subsequently adding the first and second fluid inlet having the desired dimensions using (e.g.) laser drilling. Moreover, adapting the outlet geometry does not require a modification of the first piece. It was also found that the reactor represents a static mixing device which is easily installed in devices adapted for mixing two fluid streams in which the fluid flow is driven by external gas pressure, as for example disclosed in WO 2023/079039 A1.

Some of these advantages may be particularly pronounced for those embodiments in which the first and the second fluid conduit are designed to be relatively short, as explained in more detail below, such that each nozzle position is well accessible for high precision tools and processes during the manufacture. For example, if the nozzle orifices are introduced by mechanical precision drilling or by laser drilling, the drilling tools can be brought into close proximity of the nozzle positions, which results in the minimisation of the tolerances.

In a more general sense, the reactor according to the current disclosure also addresses the problem of providing a suitable device for enabling the cost-effective aseptic or sterile manufacturing of small batches of a liquid product, such as a liquid pharmaceutical composition for injection obtainable from mixing two or more liquid substrates, in that the reactor is substantially polymeric and that can be designed as a disposable processing device which at the same time fulfils all precision requirements. As a disposable and cost-efficient device to manufacture and produce, compared to metal-bodied reactors, and as a modular system, the reactor according to the present disclosure may advantageously be used as a flexible tool for process development. For example, different nozzle orifice sizes may easily be tested, as well as various different compositions of fluid substrates.

The key features of the reactor are now explained in more detail.

As mentioned, the reactor is a jet impingement reactor. In the context of the present invention, a jet impingement reactor is a static mixing device having a reaction chamber with at least two fluid inlets provided by nozzles that allow two fluids, in particular two liquids, to be injected into the reaction chamber with a pressure that is typically higher than ambient pressure. Through the inlets, fluid streams are injected such as to collide (i.e. impinge on one another) inside the reaction chamber, which may lead to rapid, intensive and turbulent mixing. According to a general preference, the fluids are liquids. According to a further general preference, the two fluids or liquids that are mixed in the reactor are different from one another, and as a result of the mixing, a third fluid or liquid is obtained.

The first piece, which represents a major part of the reactor housing in that it comprises at least a significant portion of the reaction chamber as well as the first and the second inlet, is made of a polymeric material. As used herein, being made of a polymeric material does not exclude the presence of certain amounts of non-polymeric material. In other words, the expression "made of a polymeric material" should be understood as largely or predominantly made of polymer. For example, the first piece may include certain structures such as identification tags which are not per se polymeric. Moreover, the main material of which the first piece is composed may represent a (e.g. thermoplastic) polymeric material that further contains one or more additives such as glass fibres, ceramic fillers, plasticisers, antioxidants, colouring agents, antimicrobial agents, antistatic agents, UV stabilisers, flame retardants and the like. In some preferred embodiments, at least the first and the second piece of the reactor as disclosed herein are based on, or substantially made of a polymeric material, which optionally includes one or more additives. In some embodiments, the reactor essentially consists of the first and the second piece as described herein, and wherein both the first and the second piece are made of a polymeric material.

A reaction chamber, as used herein, is a chamber within a reactor that provides the space in which two fluids come into contact with once another such as to mix or react. Typically, a reaction chamber requires a shape and internal dimensions that distinguish it from e.g. a simple T- or Y-piece which essentially consists of two (or three) tubes joined together with their lumina forming a T- or Y-shaped flow path. For example, a reaction chamber preferably comprises at least one diameter that is larger than the diameters of its fluid inlets.

According to this aspect of the present invention, the overall shape of the reaction chamber is spherical, wherein the spherical shape is interrupted by the fluid inlets and the fluid outlet. As is understood by the person skilled in the applicable technical field, a spherical overall shape of a chamber in a device may not necessarily represent a perfect sphere. Minor deviations, e.g. within manufacturing tolerances, or small features that enhance manufacturability are still within the scope of the expression "spherical". The overall shape of the reaction chamber may therefore also be described as spheroidal. A spheroidal overall shape means that at least the larger part of reaction chamber as defined by the internal surface of the chamber wall is at least similar to a sphere. For example, the spheroid may be shaped such that some of its cross sections are, strictly speaking, ellipses rather than circles as in a perfect sphere. In one embodiment, all parts or portions of the reaction chamber or of the interior surface of the chamber wall except for those portions that define an inlet or an outlet, or small planar wall portions as described below, are substantially spheroidal or spherical.

A fluid inlet, in this context, means an opening, orifice or interruption in or of the reaction chamber wall such as to allow fluid to enter the chamber. The first and the second fluid inlet are each provided by a nozzle. For example, if the nozzle is a simple plain-orifice nozzle comprising a narrow bore or lumen having an upstream end and a downstream end, the downstream end of the bore or lumen forms the fluid inlet. In more general terms, a "nozzle" refers to a device or device component adapted to control the direction, velocity and/or other characteristics of a fluid flow and which comprises at least one fluid path, whereas an "inlet" primarily refers to the cross-section of the fluid path at the downstream end of such nozzle, unless the context dictates that these expressions are used with a different meaning. Preferably, the downstream ends of the nozzles providing the first and the second fluid inlet are substantially flush with the reaction chamber wall.

Optionally, the reactor may exhibit one or more further fluid inlets. For example, a third and a fourth fluid inlet may be arranged such as to provide a further fluid collision point, or to form a common fluid collision point together with the first and second fluid inlet. However, in one of the generally preferred embodiments, the first and the second fluid inlet are the only fluid inlets of the reactor.

As mentioned, the first and the second fluid inlet are arranged at opposite positions on a first central axis of the reaction chamber such as to point at one another. Preferably, the nozzles which provide the first and the second fluid inlet are oriented such as to point at one another at an angle of approximately 180°. This orientation enables the injection of two fluid streams into the reaction chamber in such a way that they frontally collide, or impinge upon each other at an angle of approximately 180°, depending on the pressure and/or velocity of the fluid streams.

The fluid outlet should be understood as an opening in the reaction chamber wall adapted for allowing fluid to exit the chamber. As mentioned, the fluid outlet is positioned on a second central axis of the reaction chamber which is perpendicular to the first central axis on which the fluid inlets are arranged. For example, the first central axis may have a substantially horizontal orientation when the reactor is operated, and the second central axis may have a substantially vertical orientation. Moreover, the orientation of the reactor when operated may be such that the fluid outlet is arranged at an upper position of the reaction chamber so that the direction of the fluid flow within the reaction chamber is at least partially against gravity.

As mentioned, the first and the second fluid conduit are arranged for conducting a first fluid to the first fluid inlet and a second fluid to the second fluid inlet. In other words, the first and the second fluid steams are supplied to the reaction chamber via these fluid conduits. In this context, the fluid conduits are three-dimensional structures which include an internal fluid path that provides a fluid connection between an upstream end and a downstream end of the respective fluid conduit The third fluid conduit is adapted to conduct the third fluid, which results from the mixing or the reaction of the first and the second fluid, away from the reaction chamber in a downstream direction. For the avoidance of doubt, the downstream direction may be an upward or anti-gravity direction of flow, depending on the orientation of the reactor.

According to one of the key features of the reactor disclosed herein, the reactor consists of at least two pieces that are affixed to each other. In this context, the affixment between the pieces may be separable or releasable (i.e. without damage), or permanent. A first piece comprises at least a portion of the first or the second fluid conduit and at least a hemispherical portion of the reaction chamber. A second piece comprises at least the fluid outlet, and in some embodiments, a portion of the reaction chamber. In some embodiments, the first piece further comprises, or is adapted to receive, the two nozzles that provide the first and the second fluid inlet, as described in more detail below.

The second piece may be affixed to the first piece simply by forced partial or complete insertion into the first void, for example if the first void is slightly tapered. This may not require any additional fastening means. The polymeric material of which at least the first piece and optionally also the second piece is made, would typically have some degree of elasticity so that the contact between the two pieces is maintained.

In other embodiments, the first and the second piece may be held together by fastening means such as screws, or they may be glued or fused together. Alternatively, or in addition, they may be held together by snap-fit or press-fit features that the first or the second piece, or more preferably that both the first and the second piece are provided with. For example, suitable snap-fit or press-fit features may include a rim and a matching groove, such as a rim provided in the contact surface of the first piece and a corresponding groove provided in the contact surface of the second piece for receiving the rim, or vice versa. Optionally, at least one of the materials that are used for providing such rim or groove should have some degree of flexibility or elasticity. In some of the preferred embodiments, the first and the second piece are press-fitted, and additional fastening means are preferably absent.

In some embodiments, the first piece may comprise one or more insertion guides to facilitate the insertion of the second piece at a defined orientation relative to the first piece. Vice versa, the second piece that is shaped and adapted so as to be insertable into the first piece may comprise a complementary insertion guide or insertion feature which ensures insertion as well as fit at the correct orientation relative to the first piece. For example, in one embodiment, one or more protrusions features are provided on the contact surface of the second piece that are complementary to one or more complementarily shaped grooves or recesses arranged in the first piece.

Additional features may optionally be used to ensure that the first piece and the second piece are not only firmly affixed to one another, but also that the contact between the pieces is sufficiently tight and even that the leaking of fluid from the reactor is prevented. For example, a gasket may be provided between the first and the second piece for sealing the contact between the two pieces. In other embodiments, no gasket is present between the first and the second piece.

In some embodiments, one of the two pieces is overmolded over the other one, which may be considered as similar to welding as heat is used to partially soften or melt material at the desired contacting surface of at least one of the two pieces to fuse that surface with the corresponding contacting surface of the other one of the two pieces. Overmolding may be a useful technique if at least one of the two housing pieces is made of a polymer material that can be formed by melt injection or injection molding. In some embodiments, more than one means or methods for affixing the two housing pieces together, either permanently or non-permanently may be used.

In some embodiments, the reactor, or the housing of the reactor essentially consists of the first and the second piece. In other words, the reactor's main body consists of only two parts as described herein. As a skilled person would understand, this does not exclude the presence of auxiliary structural or functional components which may be associated with the housing. Non-limiting examples of such further components include fastening means such as screws, bolts, luer fittings or nuts; identification means such as RFID chips or QR codes; or sensors such as temperature probes; gaskets or the like.

As mentioned, the first piece of the reactor comprises at least a portion of the first or the second fluid conduit and at least a hemispherical portion of the substantially spherical reaction chamber. A hemispherical portion, in this context, is a portion of the reaction chamber which comprises, or encloses, a portion of the chamber having the shape of a hemisphere. In some of the preferred embodiments, the first piece comprises a larger portion than a hemisphere, such as at least about 55% or at least about 60% of the internal volume of the reaction chamber, calculated on the basis of the approximate sphere which would result from the reaction chamber wall if it were not interrupted by the fluid inlets and the fluid outlet, and optionally other minor deviations from the spherical shape of the reaction chamber wall. In another preferred embodiment, the first piece of the reactor comprises about 50% of the internal volume of the reaction chamber calculated on the basis of the approximate sphere which would result from the reaction chamber wall if it were not interrupted by fluid inlets, fluid outlet, or non-spherical wall protrusions or recesses.

The second piece, which comprises the fluid outlet, is designed to be at least partially insertable into the first piece. In a related embodiment, the first piece is shaped to comprise a void - hereinafter referred to as the first void - for receiving the second piece by insertion, i.e. at least partial insertion, and the second piece is shaped and adapted to be insertable. i.e. at least partially insertable, into the first void.

The first void may be shaped such as to facilitate insertion. For example, its surface may have a cylindrical, cylindroidal, or tapered shape. In this context, cylindroidal should be understood to a cylinder-like overall shape, but with one or more minor deviations from the shape of a perfect cylinder. A tapered cylindroid, in this context, should be tapered such that its upstream end, i.e. located at the reaction chamber, is narrower than its downstream end. The second piece, or at least its insertable portion, may advantageously have a shape which substantially matches the shape of the first void.

In some preferred embodiments, the second piece comprises an upstream end comprising the fluid outlet of the reaction chamber and also a portion of the reaction chamber; a downstream end, and the third fluid conduit, wherein the third fluid conduit fluidically connects the upstream end with the downstream end. In this particular context, a portion of the reaction chamber should be understood such that the second piece also provides a portion of the reaction chamber wall. Such wall portion would typically encircle the fluid outlet and, when inserted into the first void, be flush with a complementary portion of the reaction chamber wall provided by the first piece. In terms of dimensions, the portion of the reaction chamber wall provided by the second piece may, for example, represent about 2 to about 25% of the surface of the reaction chamber wall, or optionally from about 5 to about 20%, respectively. In other embodiments, the portion of the reaction chamber wall provided by the second piece is between 5% to 50% of the surface of the reaction chamber wall. In yet another embodiment, the second piece of the reactor comprises up to 50% of the internal volume of the reaction chamber, as calculated on the basis of an approximate sphere which would result from the reaction chamber wall if it were not interrupted by the fluid outlet or any non-spherical wall elements, such as recesses, or protrusions. Moreover, the portion of the reaction chamber wall provided by the second piece may be shaped as a spherical zone. In this context, a spherical zone is the surface of a spherical segment excluding the bases.

In a further preferred embodiment, the second piece is fully insertable into the first void. In a related embodiment, the downstream end of the second piece is flush with the surface of the first piece that encircles the first void.

In some embodiments, the downstream end of the second piece may be adapted with, or may comprise a connector for affixing a tube or pipe, such as a luer fitting or a barbed connector, or barbed fitting.

As mentioned, at least the first piece of the reactor is made of a polymeric material. In some of the preferred embodiments, the first piece is made at least predominantly from a thermoplastic polymeric material, wherein the thermoplastic polymeric material preferably comprises polytetrafluoroethylene (PTFE), polyamide, polycarbonate (PC), polyether ether ketone (PEEK), polyethylene (PE), polypropylene (PP), polystyrene (PS), acrylonitrile butadiene styrene (ABS), polyoxymethylene (POM), polyphenylsulfone (PPSF or PPSU), or polyetherimide (PEI). In some embodiments, both the first and the second piece are made at least predominantly from such thermoplastic polymeric material.

In this context, being made predominantly of a thermoplastic polymeric material does not exclude the presence of minor amounts of one or more non-thermoplastic or non-polymeric materials. In other words, a thermoplastic polymeric material is the dominant component of the respective piece, even if it is not the only component. In this context, dominant means that the thermoplastic polymeric material represents the largest fraction of the composition by weight and/or dictates the physical properties of the composition. For example, the material composition from which the respective piece is made contains a sufficient amount of a thermoplastic polymeric material to ensure that the entire material composition behaves as a thermoplastic material and can be thermoformed, e.g. by injection molding or melt injection.

In some preferred embodiments, the first piece, or both the first and the second piece, is at least predominantly made from PEEK. For example, unfilled grades of PEEK essentially consisting of the polymer alone may be used. Alternatively, PEEK grades with one or more fillers such as glass fibres or carbon fibres may be used.

Examples of further optional additives that may be used, without limitation, include ceramic fillers, plasticisers, antioxidants, colouring agents, antimicrobial agents, antistatic agents, UV stabilisers, flame retardants and the like. In some embodiments, both the first and the second piece of the housing as disclosed herein are based on, or substantially made of a thermoplastic polymeric material, which optionally includes one or more additives.

In some embodiments, the first and the second fluid conduit each have a longitudinal central axis which is congruent with the first central axis (x) of the reaction chamber. Moreover, the third fluid conduit may have a longitudinal central axis which is congruent with the second central axis (y) of the reaction chamber. In this context, the longitudinal central axis of a fluid conduit should be understood as the longitudinal central axis of the lumen of the conduit. In effect, these embodiments provide a direction of fluid flow in the respective conduit which is the same direction as the direction of fluid flow into or out of the reaction chamber, i.e. there is no change of the flow direction in the conduits or between the reaction chamber and the respective conduit.

According to some further embodiments, the first and/or the second fluid conduit has a lumen with an upstream portion and a downstream portion, wherein the upstream portion is cylindrical or cylindroidal, and wherein the upstream portion has a substantially larger diameter than the downstream portion. In this context, substantially larger means at least about 20% larger, based on the diameter of the downstream portion, and optionally at least about 50% larger. The diameter of the fluid conduit should, in this context, be understood as the internal diameter, i.e. the diameter of a cross-section of the lumen of the respective portion or segment of the fluid conduit

In some further embodiments, the downstream portion of the first and the second fluid conduit each have a downstream end which forms, or is congruent with, the first and the second fluid inlet, respectively. In other words, these two fluid inlets of the reaction chamber are provided by the downstream ends of the downstream portions or segments of the fluid conduits. Thus, the downstream portions or at least their downstream ends may also be understood as being part of the nozzle structures that provide the fluid inlets, as described above; and the nozzles may be understood as being provided by the downstream portions of the fluid conduits.

In some embodiments, the downstream portions or segments of the first and the second fluid conduit are tapered towards, or away from their downstream ends. In some other preferred embodiments, the downstream portions are substantially cylindrical. In this context, substantially cylindrical should be understood as covering cylindroidal shapes with minor deviations from perfect cylinders as typically result from laser- or microdrilling processes. For example, laser drilling may lead to a substantially cylindrical downstream conduit portion whose diameter at one end may slightly differ from the diameter at its other end, but typically by not more than about 2-5% (the percentage being based on the smaller diameter).

As mentioned, an advantage of the invention is the good accessibility of the positions of the reactor housing where the first and second fluid conduits and the fluid inlets of the reaction chamber are arranged, which makes processes such as laser- or microdrilling better feasible. The inventors have also found that downstream portions with substantially cylindrical shapes, compared to tapering, do not appear to have any major effect on the flow of the first and second fluid in terms of flow resistance. This is particularly true if the narrow cylindrical downstream portions are relatively short, such as less than about 1 mm, or not more than about 0.5 mm, such as from about 0.2 mm to about 0.5 mm, for example about 0.3 mm. In some embodiments, the lumen diameters of the cylindrical downstream portions or segment of the first and second fluid conduits are, independently, substantially the same as the diameter of the fluid inlet with which their downstream end is congruent with.

In some further embodiments, the lumen of the first and the second fluid conduit further comprises a middle portion between the upstream and the downstream portion, wherein the middle portion is tapered towards the downstream portion. If the downstream portion is also tapered, the middle portion and the downstream portion may optionally exhibit different taper angles.

These embodiments are particularly useful in cases where the nozzles that provide the first and the second fluid inlet are part of the first piece. As discussed above, the first and the second fluid inlet are each provided by a nozzle. In principle, various different options exist with respect to the nature of these nozzles. In some of the preferred embodiments, the nozzles - at least one of them - are monolithically coherent with the first piece of the reactor in which they are accommodated. In this context, monolithically coherent means that the nozzle is an integral part of the piece and made of the same material. For example, if the nozzles are designed as plain-orifice nozzles, they may be introduced directly into the respective housing pieces by precision drilling or laser drilling. In other embodiments, the nozzles may be introduced by wire over-moulding.

In some other embodiments, the nozzle providing the first or the second fluid inlet is an insert accommodated within the first piece of the reactor. It is noted that an insert, regardless of its material, is not monolithically coherent with the housing piece. Optionally, the nozzle which is provided as an insert is made from the same material as the first piece within which it is inserted. Alternatively, the nozzle may be made of a different material than the first piece.

For example, a nozzle if provided as an insert may be shaped such as to comprise or consist of a cylindrical pipe. Accordingly, such nozzle would represent a plain-orifice nozzle. For this embodiment, it is further preferred that both nozzles are plain-orifice nozzles. As used herein, a plain-orifice nozzle is a nozzle that characterised by a simple orifice that essentially has the shape of a simple (i.e. substantially cylindrical) through-hole, which may in view of its small dimensions also be referred to as pinhole. Alternatively, the nozzle may also be provided as a shaped-orifice nozzle, as long as the selected shape results in the generation of a fluid stream that is capable of frontally colliding with a second fluid stream in the reaction chamber at the respective working pressures.

If an insertable plain-orifice nozzle is used, such nozzle may be provided as a piece made of a particularly hard material, such as sapphire, ruby, diamond, ceramic, glass-ceramic, glass (such as borosilicate glass) or metal, such as steel, e.g. stainless steel. In the case of steel, it is preferred that a steel quality having a high hardness and low abrasiveness is used, such as high-speed steel (HSS), which is an alloy steel containing carbide-forming elements such as tungsten, molybdenum, chromium, vanadium, and cobalt, the total amount of alloy elements typically being in the range of about 10-25 wt.%, or tungsten steel, also referred to as hard alloy, in which tungsten and cobalt are the main alloy elements. The nozzle may be prefabricated, inserted into the first piece of the reactor and affixed, e.g. by crimping or glueing.

Accordingly, in some embodiments, also the downstream portion of the lumen of the first and/or the second fluid conduit is cylindrical, or substantially cylindrical. Such downstream portion may coincide with the lumen of a cylindrical nozzle insert.

As mentioned, in some preferred embodiments, and regardless of its shape, i.e. whether cylindrical or tapered, the downstream portion of the lumen of the first and/or the second fluid conduit has a downstream end which is congruent with the respective fluid inlet. Moreover, said downstream end may advantageously be flush with the wall of the reaction chamber. The downstream portion of the lumen, or at least its downstream end, may be understood as a part or feature of the respective nozzle.

In some embodiments, the lumen of the first and/or the second fluid conduit, and more preferably the lumen of each of the first and the second fluid conduit, is substantially cylindrical, cylindroidal or slightly tapered, wherein the taper angle is constant over the length of the lumen. In this case, the lumen may have a diameter at its downstream end which is substantially larger than the diameter of the first or the second fluid inlet. As mentioned, the fluid inlets are provided by nozzles. This is in contrast to simple T- or Y-piece mixers which essentially consist of two (or three) tubes joined together with their lumina forming a T- or Y-shaped flow path, the lumen diameter of each of the tubes being uniformly the same up to the join which forms the fluid mixing zone. The function of the nozzles is, amongst others, to control the direction and increase the velocity of the fluid streams as they enter the reaction chamber through the nozzles. In order to enhance the nozzle effect and reduce any impact of the geometry of the fluid conduits, it is further preferred that the lumen diameter at the upstream end of the first and the second fluid conduit is at least twice as large as the diameter of the larger one of the first and the second fluid inlet. In related embodiments, the lumen of the first and/or the second fluid conduit has a diameter at its upstream end which is at least five times, or optionally at least ten times the diameter of the first or the second fluid inlet, respectively. In some embodiments, the lumen of each of the first and/or second fluid conduit is cylindrical or cylindroidal and has a downstream portion comprising a downstream end which is congruent with a fluid inlet, wherein the lumen diameter of each downstream portion of the first and/or second fluid conduit is independently substantially the same as the diameter of the fluid inlet (also referred to herein as orifice diameters).

The first and/or the second fluid conduit may further comprise a connector arranged at its upstream end. In this context, a connector is understood as a shaped feature that may facilitate a connection with a correspondingly shaped feature of e.g. the end piece of a tube. Examples of potentially useful connectors include male or female Luer tapers, also referred to as luer tips, Swagelok^{®} tube fittings or connectors, barbed plug-in type connectors, or couplers, such as quick couplers. Similarly, the third fluid conduit may feature a connector arranged at its downstream end. The type of connector featured on the first, second, and second fluid conduit may be independently selected, and in some embodiments are the same type, but in other embodiments, may be different from each other.

In some further embodiments, the fluid inlet provided by the first and/or the second nozzle has a diameter in the range from about 20 µm to about 600 µm. The fluid inlet diameter provided by a nozzle may also be referred to as the orifice diameter of that nozzle. In some embodiments, both the first and the second nozzle have an orifice diameter in the range of 20 µm to 500 µm, or in the range of about 50 µm to 600 µm, or about 50 µm to 500 µm. In other embodiments, both the first and second nozzle have an orifice diameter in the range of about 50 µm to 450 µm, or in the range of 100 µm to 450 µm. In a particularly preferred embodiment, the largest orifice diameter of one or both of the nozzles is no greater than 500 µm, or is less than 500 µm. In other reactor configurations, at least one of the orifice diameters is about 600 µm, about 500 µm, about 400 µm, about 300 µm, about 200 µm, about 100 µm, about 50 µm, or about 20 µm, respectively. Optionally, even smaller diameters, e.g. below 20 µm, may be considered.

In some embodiments, the fluid inlet diameters i.e. orifice diameters of the first and the second nozzle are the same, such as about 400 µm, about 300 µm, about 200 µm, or about 100 µm. Such configuration seems to work well for some but certainly not all jet impingement processes.

For many processes based on jet impingement technology best results are achieved with a reactor according to the invention that has two nozzles that differ in orifice diameter, i.e. the nozzles provide a first and a second fluid inlet having different diameters. For example, the first orifice diameter may be larger than the second orifice diameter, according to this further preferred embodiment. Such asymmetric nozzle configuration may be advantageous in various ways: For example, it may be used to control the introduction of a solvent that is required for processing purposes but undesirable in the final product. It may also be used for the generation of two liquid streams that have different flow rates but similar kinetic energy as they are injected through the nozzles into the reaction chamber where they collide.

In one embodiment, the diameter of the first fluid inlet (i.e. of the orifice of the first nozzle) is at least 20% larger than that of the second fluid inlet. In a further embodiment, the ratio of the first orifice diameter to the second orifice diameter is from about 1.2 to about 5, or in the range from about 1.2 to 2. Also preferred are embodiments in which the diameter of the first fluid inlet (i.e. the first orifice) is in the range from about 200 µm to about 500 µm, or in the range from about 200 to 400 µm and wherein the diameter of the second fluid inlet (i.e. the second orifice) is in the range from about 50 µm to about 200 µm.

For example, the following nozzle pairs may be used, wherein the first value represents the approximate diameter of the first orifice and the second value the approximate diameter of the second orifice: 100 µm and 50 µm; 200 µm and 150 µm; 200 µm and 100 µm; 200 µm and 50 µm; 300 µm and 200 µm; 300 µm and 100 µm; 300 µm and 50 µm; 400 µm and 300 µm; 400 µm and 200 µm; 400 µm and 100 µm; 400 µm and 50 µm; 500 µm and 400 µm; 500 µm and 300 µm; 500 µm and 200 µm; 500 µm and 100 µm; 500 µm and 50 µm; 600 µm and 500 µm; 600 µm and 400 µm; 500 µm and 300 µm; 500 µm and 200 µm; 500 µm and 100 µm; 500 µm and 50 µm. Again, these pairs are non-limiting examples, and other orifice diameter combinations may also be useful, depending on the specific product or process.

The reaction chamber provided by the jet impingement reactor according to the present disclosure and in some embodiments, provided by the combination and affixation of the first and second housing pieces is small, generally speaking. In some embodiments, provided is a reactor with a reaction chamber diameter that is not more than 100 times the diameter of the nozzle orifices (i.e. inlet openings) or, if nozzles with different sizes are used, with a chamber diameter that is not more than about 100 times the diameter of the larger nozzle's orifice diameter. For example, if the larger fluid inlet has a diameter of 100 µm, it is preferred according to this specific embodiment that the diameter of the reaction chamber is about 10 mm or less. In one embodiment, where the nozzle, or larger inlet opening has a diameter between 200 to 300 µm, the diameter of the reaction chamber along the first central axis is preferably in the range of 2 to 5 mm.

In a related embodiment, the ratio of the diameter of the reaction chamber along the first central axis to the first fluid inlet diameter is in the range from 6 to 60. For example, if the diameter of the first fluid inlet is about 200 µm, the diameter of the reaction chamber along the first central axis would be in the range from about 1.2 mm to about 12 mm, according to this specific embodiment. However, reactors equipped with larger nozzles may require other dimensional considerations.

According to a further related embodiment, the ratio of the diameter of the reaction chamber along the first central axis to the diameter of the fluid outlet is in the range of about 1.2 to about 3. For example, a reaction chamber having a diameter of about 3 mm would have a fluid outlet diameter of about 1 mm to about 2.5 mm, according to this specific embodiment. In one preferred embodiment, the fluid outlet diameter is about 1 to 2 mm.

When selecting the inlet diameter, also the fluid outlet diameters should be taken into consideration. For example, small nozzle orifices or fluid inlet diameters such as below 100 µm should be combined with a small fluid outlet diameter, such as below 1 mm, e.g. to ensure pressure in the reaction chamber is sufficiently high to support turbulence and rapid mixing of the two fluids during operation of the reactor. For example, when using two nozzles with orifices of 50 µm, a fluid outlet diameter of 0.5 mm may be used. Based on the disclosure and the guidance provided above, it would be clear for the skilled person that further variations of the dimensional factors may also be useful to accommodate certain product or process requirements.

As mentioned, a key feature of the reactor is the substantially spherical or spheroidal shape of the reaction chamber. In some preferred embodiments, the spherical shape of the reaction chamber is only interrupted by the first and the second fluid inlet and the fluid outlet. In other words, only the required inlets and the outlet are exceptions or interruptions with respect to an otherwise entirely spherical inner surface of the reaction chamber wall.

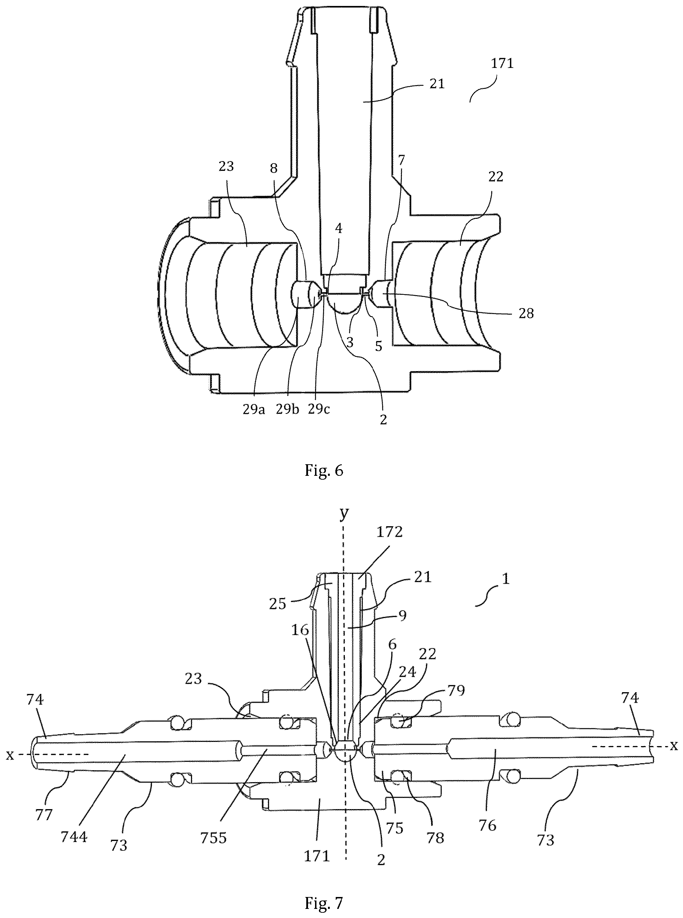

In some other embodiments, the spherical shape of the reaction chamber is only interrupted by the first and the second fluid inlet, the fluid outlet, and one or two small planar wall portions each having an area that is smaller than the area of the fluid outlet. Such small planar wall portion may be a minor artefact and a further minor deviation from the overall spherical shape of the reaction chamber. For example, the planar wall portions may be provided by the first piece as protrusions of the first piece, and the second piece may exhibit recesses for receiving these protrusions. In some further embodiments, the spherical shape of the reaction chamber is as shown in any of the embodiments as depicted Figures 7, 8, 9 or 10.

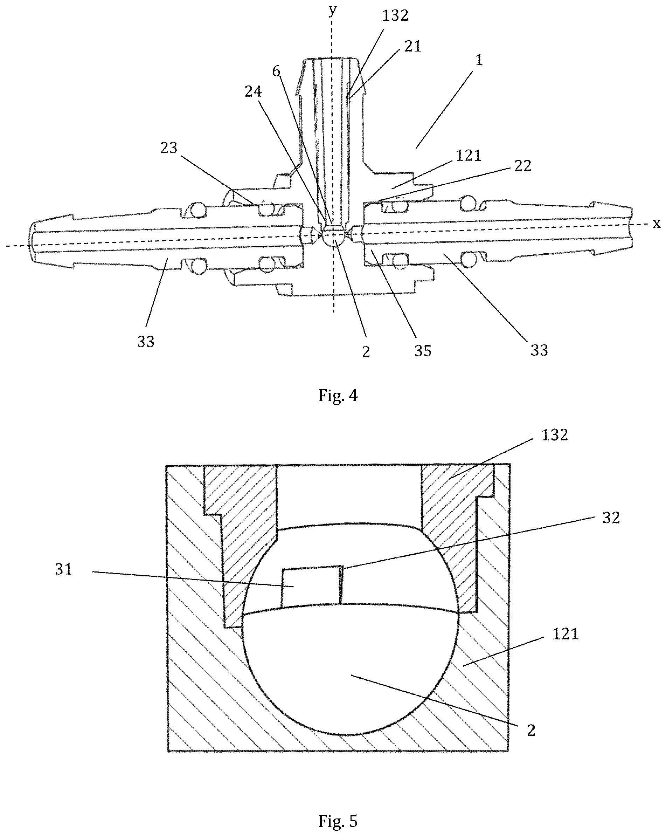

As understood herein, the term 'planar wall portion' refers to a wall portion whose shape deviates from that of a perfectly spherical cap, and which may have an overall flat or at least partially planar shape. In some embodiments, the planar wall portion is provided as a protrusion of the first piece whose distal end is approximately planar and features two right-angled corners. Non-limiting examples of small planar wall portions are shown in Figures 5, 9 and 10.

In alternative embodiments, one or more planar wall portions may be provided as protrusions of the second piece, and the first piece may exhibit one or more recesses for receiving them. In a preferred embodiment, the planar wall portion is monolithically coherent with the first piece, and made of the same material.

In one particular embodiment, the spherical shape of the reaction chamber is interrupted by the first and second fluid inlet, the fluid outlet, and two, or at least two planar wall portions, each planar wall portion independently having an area that is smaller than the area of the fluid outlet. As noted above, such planar wall portions are small and only represent a minor deviation from the overall spherical shape of the reaction chamber.

In some preferred embodiments, the first piece provides an approximately hemispherical wall portion from whose orthodrome or great circle two planar wall portions are arranged as protrusions. The dimensions of the planar wall portions may be independently selected, or in other words, the dimensions of each of the at least two planar wall portions may be different. Alternatively, the dimensions of the at least two planar wall portions may be essentially the same.

Where the first piece comprises two small planar wall portions, these are preferably arranged at diametrically opposed positions with respect to the spherical shape of the reaction chamber. In some embodiments, the first and second planar wall portion are arranged at opposite positions along the first central axis (x) of the reaction chamber.

The second piece of the reactor comprising the fluid outlet, and a portion of the reaction chamber is complementary to the first piece so that the two pieces may be affixable to each other to form the substantially spherical reaction chamber of the jet impingement reactor. In some embodiments, the second piece comprises at least two recesses, a first and a second recess which are complementary to the first piece, i.e. which are arranged on the second piece and shaped or adapted for receiving the two planar protrusion(s) comprised by the first piece, so as to allow the affixation of the two pieces together to form the reaction chamber of the jet impingement reactor. In some alternative embodiments, the features of a recess and a small planar wall protrusion with respect to the first and second piece may be interchanged.

For the supply of the first and the second fluid to the first and the second fluid conduit, respectively, the first piece of the reactor may comprise connectors, such as barb or Luer fitting enabling external supply tubes or pipes to be connected with the first piece of the reactor to establish a fluidic connection with the fluid conduits. In some preferred embodiments, these connections are achieved by connecting pieces which are partially insertable into the first piece of the reactor.

In some related embodiments, the first piece comprises a second void and a third void, wherein each of the second and the third void is shaped to receive a connecting piece for conducting the first or the second fluid from an upstream fluid supply to the first or the second fluid conduit, respectively. Such connecting piece may have an upstream end, a downstream end, and a fluid conduit extending from the upstream end to the downstream end; with at least the downstream end being insertable into the second or third void such that the fluid conduit of the connector is in fluid communication with the lumen of the first or the second fluid conduit of the reactor. The upstream end of the connecting piece may exhibit a connector for affixing a tube or pipe, such as a luer fitting or a barbed connector, or barbed fitting.

In some embodiments, the connecting piece features an external circular groove at or near its downstream end for holding an O-ring seal for sealing the connecting piece against the first piece of the housing. In some related embodiments, the connecting piece may comprise more than one, e.g. two, or a plurality of such external grooves positioned at or near the downstream end for holding O-ring seals for sealing the connecting piece against the first piece of housing. Optionally, it may be contemplated to use either in addition, or as an alternative, other means e.g. external means which are adapted for holding and sealing, e.g. releasably, the connecting piece against the first piece of the reactor.

In some embodiments, the connecting piece is also fabricated from a polymeric material, such as any one of the polymeric materials or combination of materials as described herein in reference to the first and/or the second piece of the jet impingement reactor. In some embodiments, the connecting piece is of the same polymeric material as the first and/or the second piece.

The connecting piece, whose lumen may form part of the flow path of the first or second fluid from a fluid supply arranged further upstream to the first or second fluid conduit of the reactor, may comprise an upstream portion or segment and a downstream portion or segment, which portions differ with respect to their diameter. For example, the lumen diameter of the upstream portion may be larger than the lumen diameter of the downstream portion. In other embodiments, the upstream and downstream portions do not differ and have the same diameter. In some embodiments, the lumen of the connecting piece may be essentially cylindrical. In other embodiments, the lumen of diameter of the upstream portion may be smaller than the lumen diameter of the downstream portion. In related embodiments, the difference in lumen diameter between the upstream and downstream segments may gradually change, i.e. the lumen is a tapered cylindroid. In one embodiment, the lumen may be shaped as a tapered cylindroid, such that the lumen diameter of the upstream portion of the connecting piece is smaller but gradually expands to the lumen diameter of the downstream end of the connecting piece. The taper angle is preferably slight. For example, the difference in diameter between the upstream end and the downstream end of the lumen of the connecting piece is no more than 0.5%, no more than 1 %, or no more than 5%. In other related embodiments, the difference in lumen diameter between the upstream and downstream portions may be stepped, or segmented.

In some embodiments, the lumen of the connecting piece may have the same diameter as the lumen diameter of the upstream portion of the first and/or second fluid conduit of the reactor. In other embodiments, the lumen diameter of the downstream portion or segment of the connecting piece, forming part of the flow path of a first and second fluid to the first and second fluid conduit of the reactor is essentially the same as the lumen diameter of the upstream portion of the first or second fluid conduit of the reactor. In other embodiments, the lumen diameter of the connecting piece, or the lumen diameter of the downstream portion or segment of a connecting piece is different, e.g. may be larger, or smaller than the lumen diameter of the first or second fluid conduit of the reactor.

With respect to the fluidic features upstream of the nozzles that provide the first and the second fluid inlet, the reactor may be designed in a substantially symmetrical manner. For example, the shape and the dimensions of the first fluid conduit and the second fluid conduit may be essentially the same, the shape and the dimensions of the second void may match those of the third void, and the connecting pieces that are insertable into the respective voids may also be the same or similar in design.

Alternatively, the internal diameter of the fluid conduit of the connecting piece for insertion into the second void and for supplying the (first) fluid to the reactor may be larger than the diameter of the connecting piece designed for insertion into the third void. In order to prevent assembly errors in this case, also the outer shapes or dimensions of the downstream ends of the connecting pieces may differ from one another so that a connecting piece can only be (partially) inserted into the correct void.

In further aspects, the present disclosure provides: (a) a reactor housing having the features of the first piece as described above; (b) a connecting piece as described above; and (c) a piece exhibiting the features of the second piece of the reactor as described above.

In a yet further aspect, the disclosure provides for a first piece of a reactor as described above, optionally comprising any features or combinations of features that have been disclosed as being part of optional or preferred embodiments in the context of the detailed disclosure of the reactor.

In a further aspect, and which is not claimed per se but which may serve to illustrate the invention, the present disclosure provides a method for making a reactor as described herein-above. The method comprises a step of injection molding the first piece. As mentioned, the first piece will typically provide a main part of the reactor housing. Optionally, the method may comprise the following steps: (a) injection molding of the first piece; (b) injection molding of the second piece; and (c) affixing the first and the second piece to one another. In some embodiments, the affixing step (c) comprises, or consists of, partially or entirely inserting the second piece into the first void of the first piece.

Alternatively, the method may comprise the following steps: (a) injection molding of the first piece; and (b) overmolding the second piece over the first piece; or vice versa: (a) injection molding of the second piece; and (b) overmolding the first piece over the second piece. In some embodiments, the molding step (a) also includes the formation of the first and the second fluid inlet in the first piece.

In certain embodiments, the method may comprise a step of inserting prefabricated nozzles into the first piece, which step may be conducted before or after the first and the second piece are affixed to one another, or before an overmolding step is conducted, if any.

Alternatively, and according to some other preferred embodiments, the first and/or the second fluid inlet is generated by a step of mechanical microdrilling or laser drilling of the first piece. This step may be conducted before or after step (c), i.e. before or after affixing the first and the second piece to one another. According to some further preferred embodiments, in which the first and the second fluid inlets differ in diameter and are generated by laser drilling, the larger of the two inlets is prepared first, and the smaller inlet is subsequently prepared by laser drilling, wherein the laser beam that generates the smaller inlet is directed through the already exiting larger inlet. In this manner, precise alignment of the fluid inlets on the first central axis (x) of the reaction chamber may be achieved.

Optionally, the smaller inlet may be entirely drilled through the larger inlet. In some alternative preferred embodiments, a very small hole may be initially drilled through the larger inlet to mark the position of the smaller inlet, followed by subsequent drilling from the opposite side (i.e. not through the larger inlet) such as to generate the smaller inlet having the desired diameter. This procedure may also be used to generate two inlets having the same diameter.

Such methods of preparing a jet impingement reactor comprising a housing made of a polymeric material may provide for a more efficient manufacturing process; for example, it may be contemplated that in some embodiments, while the same molds or molding tools may be used to prepare the pieces, different reactors can nevertheless be made by adapting only the drilling step to adjust the first and/or second fluid inlet diameters. It may also be contemplated, in some embodiments, that reactor pieces, and optionally the connecting piece(s), may be prepared by injection molding only, without mechanical drilling, laser drilling or machining to generate the first and/or second fluid inlet.

In a related aspect, the present disclosure also provides for a method of making a connecting piece such as described herein above, and which may be affixed to the jet impingement reactor and used to supply a first and a second fluid to the first and the second fluid conduits of the jet impingement reactor from upstream fluid supplies. The method comprises a step of injection molding the connecting piece. In some embodiments, the lumen of the connecting piece may be provided by mechanical drilling or machining of the connecting piece.

A further illustrative aspect relates to the use of the reactor as described herein above. In some particularly preferred embodiments, the reactor is used for the aseptic manufacture of a sterile liquid pharmaceutical composition. The sterile liquid pharmaceutical composition may comprise nanoparticles, such as lipid nanoparticles, as is commonly the case for example in the case of nucleic acid-based therapeutic or prophylactic medicines. The sterile liquid pharmaceutical composition may in some embodiments comprise liposomes, which are nanoparticles which are typically in the form of spheroidal vesicles, are composed of phospholipids and containing at least one lipid bilayer.

More specifically, such use may comprise the following: i) fluidically connecting the first fluid conduit via a first connecting piece to an upstream supply of a first fluid; (ii) fluidically connecting the second fluid conduit via a second connecting piece to an upstream supply of a second fluid which is different from the first fluid; and (iii) causing the first fluid to flow at a first flow rate from the supply of the first fluid into the reactor and simultaneously causing the second fluid to flow at a second flow rate from the supply of the second fluid into the reactor, thereby causing the first fluid and the second fluid to mix in the reaction chamber such as to form a third fluid which exits the reaction chamber through the fluid outlet. The third fluid which represents the mixture or reaction product of the first and the second fluid would then exit the reactor via the fluid outlet and the third fluid conduit provided by the second piece. As will be understood by a person skilled in the art, such use may also be expressed as a process or method, i.e. a process or method comprising the steps (i) to (iii) above. Moreover, a skilled artisan would also understand that the sequence of steps (i) and (ii) is not critical, whereas step (iii) is performed after steps (i) and (ii). In some processes, depending on the type of materials that are prepared using the reactor, the first flow rate and the second flow rate may be similar or even essentially the same. In many other processes, typically also including the manufacture of lipid nanoparticles as used in nucleic acid-based therapeutic or prophylactic medicines, different volumes of a first and a second fluid must be mixed, which requires that the first and the second flow rates are different. For example, a larger volume of a first fluid representing an aqueous liquid optionally comprising an active ingredient such as a nucleic acid construct may require mixing with a smaller volume of a second fluid representing an organic solution of lipids capable of forming lipid nanoparticles. Accordingly, in some of the preferred embodiments, the first flow rate is larger than the second flow rate; preferably, in such process, the first fluid inlet also has a larger diameter than the second fluid inlet.

In yet a further aspect, the disclosure provides an apparatus for the aseptic manufacture of a sterile liquid pharmaceutical composition, the apparatus is characterised in that it comprises a jet impingement reactor as disclosed herein.

### DETAILED DESCRIPTION OF THE DRAWINGS

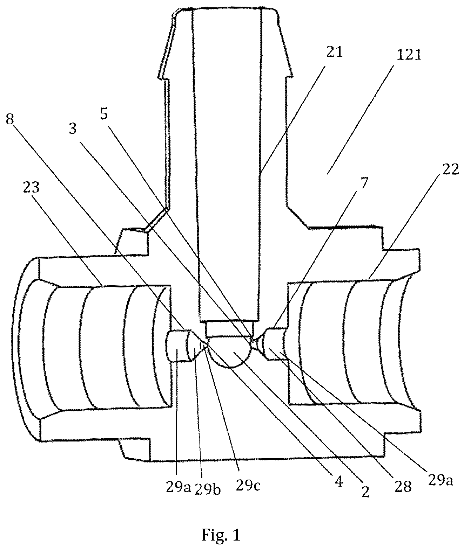

Figure 1 shows a cross-sectional view of an embodiment of a first piece (121) of a jet impingement reactor (not drawn to scale), comprising the first (7) and the second fluid conduit (8) or at least a portion of each of these. Moreover, it comprises or houses a portion of a substantially spherical reaction chamber (2). The portion provided by the first piece (121) comprises more than a hemispherical segment or portion of the reaction chamber (2). Also shown is the first (3) and the second fluid inlet (4) arranged at opposite positions on a first central axis of the reaction chamber (2) such as to point at one another, through which a first and a second fluid jet can enter the reaction chamber (2) such as to frontally collide, or impinge on another. Each of the first (3) and the second fluid inlet (4) is provided by a nozzle (5). The first piece (121) further exhibits a first void (21) which is cylindroidal, slightly tapered and shaped to for receiving a second reactor piece by insertion. The first (7) and the second fluid conduit (8) each have a lumen with an upstream portion (29a), a downstream portion (29c), and therebetween a middle portion (29b) which is tapered towards the downstream portion (29c). Also the downstream portion (29c) has a taper towards the respective fluid inlet (3, 4), the taper angle being different from that of the middle portion (29b). The downstream end of the downstream portion (29c) is congruent with the respective fluid inlet (3, 4). The upstream portion (29a) of each fluid conduit (7, 8) has a cylindrical shape. The first piece (121) further comprises a second void (22) and a third void (23), each of which is shaped to receive a connecting piece for conducting the first or the second fluid from an upstream fluid supply to the first (7) or the second fluid conduit (8), respectively.

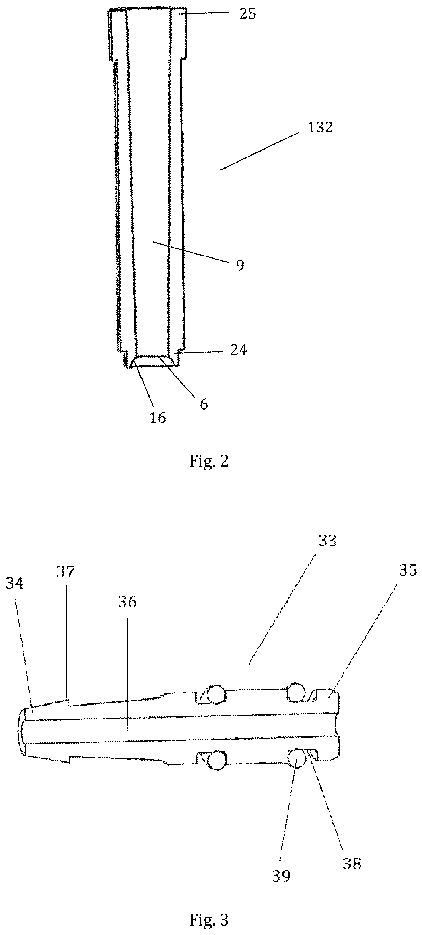

Figure 2 shows a cross-sectional view of an embodiment of a second piece (132) of a jet impingement reactor (not drawn to scale) designed to match the first piece (121) shown in Figure 1, and to be insertable in the first void (21) of the first piece (121). The second piece (132) comprises an upstream end (24) and a downstream end (25). A lumen between these represents a third fluid conduit (9), which fluidically connects the upstream end (24) with the downstream end (25). The upstream end (24) is designed to provide, in its inserted state, a portion (16) of the reaction chamber wall, and includes the fluid outlet (6).

Figure 3 shows a cross-sectional view of an embodiment of a connecting piece (33), not drawn to scale, designed to match the first piece (121) shown in Figure 1, and for conducting a first or a second fluid from an upstream fluid supply to the first (7) or the second fluid conduit (8) of the first piece (121). The connecting piece (33) has an upstream end (34), a downstream end (35), and a fluid conduit (36) extending from the upstream end (34) to the downstream end (35). It is shaped such that at least the downstream end (35) is insertable into the second (22) or third void (23) of the first piece (121). Moreover, the connecting piece (33) features an external circular groove (38) at its downstream end (35) for holding an O-ring seal (39) for sealing the connecting piece (33) against the first piece (121) shown in Fig. 1. A further external circular groove holding another O-ring seal is arranged further upstream of the downstream end (35) and the first circular groove (38). The upstream end (34) of the connecting piece (33) exhibits a barbed connector (37) or fitting for affixing a tube or pipe.

Figure 4 shows a cross-sectional view of an embodiment of a jet impingement reactor (1) comprising the first piece (121) shown in Figure 1 together with the second piece (132) of Figure 2 and two connecting pieces (33) as shown in Figure 3. The second piece (132) is fully inserted in the first void (21). The downstream ends (35) of the connecting pieces (33) are inserted into the second (22) and third void (23) arranged in the first piece (121) of the reactor (1). The upstream end (24) of the second piece (132) now provides a portion of the wall of the reaction chamber (2) and the fluid outlet (6). For a description of other depicted features, reference is made to Figures 1, 2 and 3.

Figure 5 shows a cross-sectional view of a specific embodiment of a substantially spherical reaction chamber (2) formed by a first piece (121) and a partially or fully inserted second piece (132); only part of the first (121) and the second piece (132) are depicted. A small planar wall portion (31) of the reaction chamber wall is provided by the first piece (121). The second piece (132) exhibits a recess (32) which receives the protrusion that forms the planar wall portion (31).

Figure 6 shows a cross-sectional view of another embodiment of a first piece (171) of a jet impingement reactor (not drawn to scale), comprising the first (7) and the second fluid conduit (8) or at least a portion of each of these. Moreover, it comprises or houses a portion of a substantially spherical reaction chamber (2), which portion represents .an approximately hemispherical segment or about 50% of the reaction chamber (2). Also shown is the first (3) and the second fluid inlet (4) arranged at opposite positions on a first central axis of the reaction chamber (2) such as to point at one another, through which a first and a second fluid jet can enter the reaction chamber (2) such as to frontally collide, or impinge on another. Each of the first (3) and the second fluid inlet (4) is provided by a nozzle (5). The first piece (171) further exhibits a first void (21) which is cylindroidal, slightly tapered and shaped to for receiving a second reactor piece by insertion. The first (7) and the second fluid conduit (8) each have a lumen with an upstream portion (29a), a downstream portion (29c), and therebetween a middle portion (29b). The middle portion (29b) of the lumen is tapered towards the downstream portion (29c). In this depicted embodiment, the downstream portion (29c) of the lumen of the first (7) and second fluid conduit (8) is cylindroidal or cylindrical, with a lumen diameter which is substantially smaller than the lumen diameter of the upstream portion (29b), e.g. less than half the diameter of the lumen upstream portion (29b). The downstream end of the downstream portion (29c) is congruent with the respective fluid inlet (3, 4), i.e. the downstream portion (29c) has a lumen diameter which is substantially the same as the respective fluid inlet (3, 4) orifice diameter. The upstream portion (29a) of each fluid conduit (7, 8) has a cylindrical shape. The first piece (171) further comprises a second void (22) and a third void (23), each of which is shaped to receive a connecting piece for conducting the first or the second fluid from an upstream fluid supply to the first (7) or the second fluid conduit (8), respectively.

Figure 7 shows a cross-sectional view of an embodiment of a jet impingement reactor (1), not drawn to scale, comprising the first piece (171) as shown in Figure 6 together with a second piece (172) and two connecting pieces (73). The second piece (172) is fully inserted in the first void (21) of the first piece (171). The second piece (172) comprises an upstream end (24) and a downstream end (25). A lumen between these represents a third fluid conduit (9), which fluidically connects the upstream end (24) with the downstream end (25) of the second piece (172). The upstream end (24) is designed to provide, in its inserted state, a portion (16) of the substantially spherical reaction chamber (2) wall, and the fluid outlet (6). The portion of the substantially spherical reaction chamber (2) provided by the second piece (172) may provide up to 50% of the internal volume of the reaction chamber (2), calculated on the basis of the approximate sphere which would result from the reaction chamber wall if it were not interrupted by the fluid inlets (3, 4) and the fluid outlet (6), and optionally, any other features which may interrupt the sphere and which are not depicted.

The downstream ends (75) of the two connecting pieces (73) are inserted into the second (22) and third void (23) arranged in the first piece (171) of the reactor (1). The two connection pieces (73) are for conducting a first or a second fluid from an upstream fluid supply to the first (7) or the second fluid conduit (8) of the first piece (171) as depicted in Figure 6. The connecting piece (73) has an upstream end (74), a downstream end (75), and a fluid conduit (76) extending from the upstream end (74) to the downstream end (75). It is shaped such that at least the downstream end (75) is insertable into the second (22) or third void (23) of the first piece (171).

As depicted in this Figure, the fluid conduit (76) of the connecting piece (73) has different lumen diameters in its upstream portion or segment (744) versus its downstream portion or segment (755). As shown, the lumen diameter of the upstream portion (744) is larger than the diameter of the downstream portion (755). The length of the downstream portion (755) of the connecting piece (73), co-axial with the first central axis (x) corresponds approximately to the portion of the connecting piece which is insertable or inserted into the second (22) or third void (23) of the first piece (171) of the reactor.

Moreover, the connecting piece (73) features at least one external circular groove (78) at its downstream end (75) for holding an O-ring seal (79) for sealing the connecting piece (73) against the first piece (171). A further external circular groove holding another O-ring seal is arranged upstream of the first circular groove (78). The upstream end (74) of the connecting piece (73) exhibits a barbed connector (77) or fitting for affixing a tube or pipe.

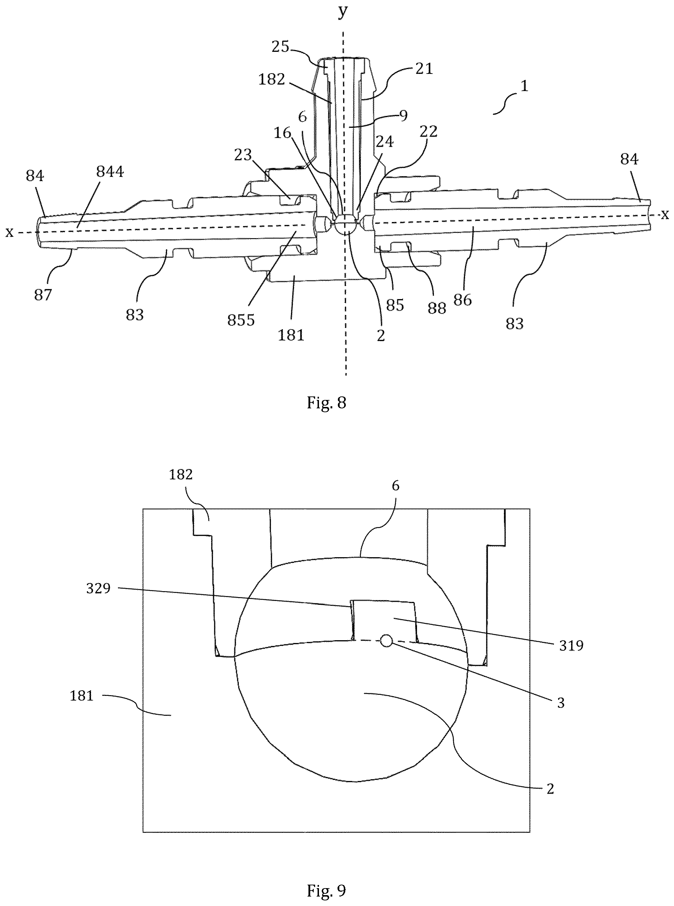

Figure 8 shows a cross-sectional view of another embodiment of a jet impingement reactor (1), not drawn to scale, comprising a first piece (181) affixed together with a second piece (182) and two connecting pieces (83). The second piece (182) is fully inserted in the first void (21) of the first piece (181). The second piece (182) comprises an upstream end (24) and a downstream end (25). A lumen between these ends represents a third fluid conduit (9), which fluidically connects the upstream end (24) with the downstream end (25) of the second piece (182). The upstream end (24) is designed to provide, in its inserted state, a portion (16) of the substantially spherical reaction chamber (2) wall and the fluid outlet (6). The portion of the spherical reaction chamber provided by the second piece (182) may be up to 50% of the internal volume of the reaction chamber (2), calculated on the basis of the approximate sphere which would result from the reaction chamber wall if it were not interrupted by the fluid inlets, the fluid outlet (6), and optionally any small non-spherical elements which may protrude or recess from the wall of the reaction chamber (not depicted).

The downstream ends (85) of the two connecting pieces (83) are inserted into the second (22) and third void (23) arranged in the first piece (181) of the reactor (1). The two connection pieces (83) are for conducting a first or a second fluid from an upstream fluid supply to the first (7) or the second fluid conduit (8) of the first piece (181). See Figure 6 for a reference to an analogous first (7) and second fluid conduit (8). The connecting piece (83) has an upstream end (84), a downstream end (85), and a fluid conduit (86) extending from the upstream end (84) to the downstream end (85). It is shaped such that at least the downstream end (85) is insertable into the second (22) or third void (23) of the first piece (181).

The fluid conduit (86) of the connecting piece (83) has a different lumen diameter with respect to its upstream portion or segment (844) and its downstream portion or segment (855). As shown, the lumen diameter of the upstream portion (844) is smaller than the diameter of the downstream portion (855). The lumen is tapered, i.e. gradually expanding from a smaller lumen diameter at the upstream end (84) to a larger lumen diameter at the downstream end (85). The connecting piece (83) also features at least one external circular groove (88) at its downstream end (75) for holding an O-ring seal (not depicted) for sealing the connecting piece (83) against the first piece (181). A further external circular groove holding another O-ring seal is arranged further upstream of the downstream end (85) and the first circular groove (88). The upstream end (84) of the connecting piece (83) exhibits a barbed connector (87) or fitting for affixing a tube or pipe.

Figure 9 shows a cross-sectional, perspective and enlarged view (not drawn to scale) of a specific embodiment of a substantially spherical reaction chamber (2), formed by a first piece (181) and a partially or fully inserted second piece (182); only part of the first (181) and the second piece (182) are depicted. A small planar wall portion (319) of the reaction chamber wall is provided by the first piece (181). As shown, a fluid inlet (3) is comprised by the first piece (181) and is arranged on the first central axis (x, not depicted, see Figure 8). In this embodiment, the first piece (181) and the second piece (182) join at the orthodrome of the substantially spherical reaction chamber (2), i.e. at the circular intersection of the reaction chamber (2) and a plane passing through the sphere's center point at the first central axis (x). A small planar wall portion (319) is featured as a protrusion from the first piece (181) arising from and extending beyond the orthodrome. The second piece (182) provides a portion of the substantially spherical reaction chamber wall, a fluid outlet (6), and a recess (329) which receives the protrusion of the first piece (181) that forms the planar wall portion (319).

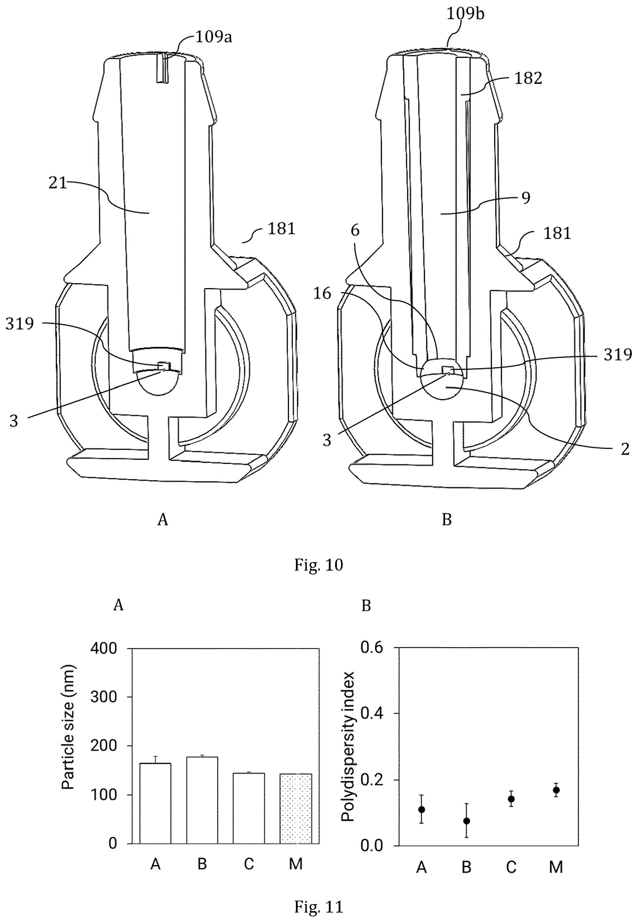

Figure 10 shows a cross-sectional and perspective view (A) of the first piece (181) alongside a cross-sectional and perspective view (B) of the same first piece (181) affixed to a second piece (182). The first piece (181) comprises a fluid inlet (3) located at the base of a planar wall portion (319), and a first void (21) for insertion of the second piece (182). As shown in view (A), the planar wall portion (319) is a small protrusion arising from the hemispherical chamber portion provided by the first piece (181). Also depicted is an insertion guide (109a), which in this embodiment is depicted as a recess arranged at the downstream end of the first void (21). Other features of the first piece (181) are referenced in Figures 8 or 9, with analogous features being referenced in Figure 6.

View (B) shows the inserted second piece (182) which comprises an insertion guide feature (109b) e.g. such as a protrusion or barb that is complementary to the insertion guide (109a) of the first piece (181), so as to ensure correct insertion and affixation of the second piece (182) to the first piece (181), i.e. with the second piece (182) having the correct orientation relative to the first piece (181). Affixed to one another, the first (181) and second piece (182) form the substantially spherical reaction chamber (2), and the planar wall portion (319) is received by the complementary recess (329, not shown) arranged in the portion of the reaction chamber wall (16) provided by the second piece (182). The second piece also provides the fluid outlet (6). For other features, reference should be made to Figures 8, 9 and 6.

Figure 11 shows graphical depictions of the particle sizes (avg. diameter (nm); graph A) and polydispersity indexes (PDI; graph B) characterized for the PLGA nanoparticles obtained using polymeric jet impingement reactors (A, B, and C) according to the invention and obtained using a stainless-steel reactor (M) as described in Example 1. The average particle size of the PLGA nanoparticles obtained are less than about 200 nm. The average PDI measured for the PLGA nanoparticles are less than 0.2.

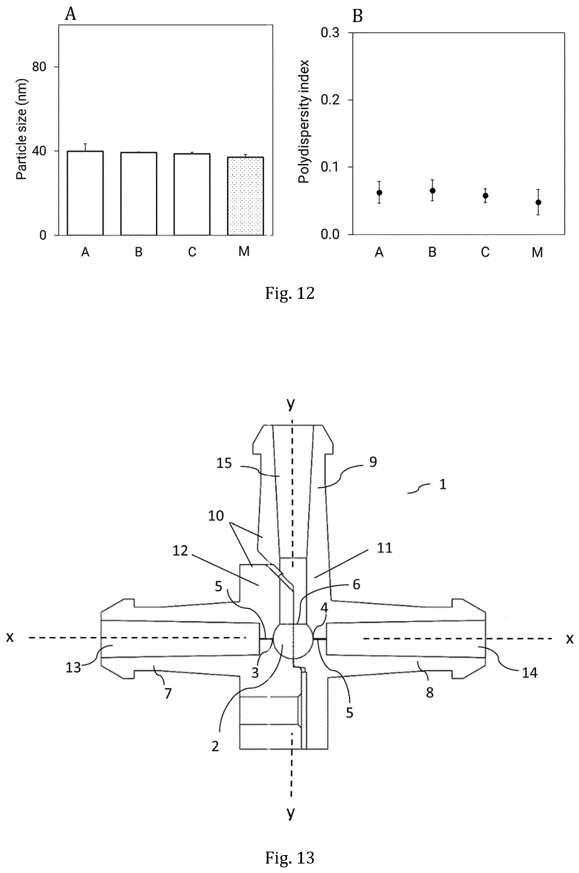

Figure 12 shows graphical depictions of the particle sizes (avg. diameter (nm); graph A) and polydispersity indexes (PDI; graph B) characterized for liposome nanoparticles obtained using polymeric reactors (A, B, and C) according to the invention or a stainless-steel reactor (M) as described in Example 2. The average particle size of the liposome nanoparticles obtained are less than about 40 nm. The average PDI measured for the liposome nanoparticles are less than 0.1.

Figure 13 depicts a cross-sectional view, which is not drawn to scale, of an alternative example of a jet impingement reactor (1) comprising a housing (10) made of a polymeric material, the housing consisting of two pieces (11, 12) that are affixed to each other, wherein the first piece of the housing (11) comprises at least a major portion of the second fluid conduit (14), and at least a major portion of the third fluid conduit (9), and also part of the wall of the reaction chamber (2). The second housing piece (12) comprises the remaining part of the wall forming the reaction chamber (2) and the first fluid conduit (7). The reaction chamber wall is divided such that about half of it including the fluid inlet (4) and half of the fluid outlet (6) are formed by the first housing piece, and the other half of the reaction chamber wall, the other fluid inlet (3) and the other half of the fluid outlet (6) are accommodated in the second housing piece (12). The contact area between the first piece and the second piece includes a section which extends through the centre of the reaction chamber along the second central axis (y), which may have a vertical orientation when the reactor is operated, i.e. in the operational orientation of the reactor. The housing (10) encloses a reaction chamber (2) which has a substantially spherical shape, the spherical shape only being interrupted by a first (3) and a second fluid inlet (4), and (b) a fluid outlet (6). The first (3) and the second fluid inlet (4) are arranged at opposite positions on a first central axis (x) of the reaction chamber such as to point at one another, and each of the first and the second fluid inlet is provided by a nozzle (5). The fluid outlet (6) is arranged at a position located on a second central axis (y) of the reaction chamber which is perpendicular to the first central axis (x). The first (7), a second (8) and a third fluid conduit (9), each have respectively a lumen, the lumen of the first (13) and second fluid conduit (14) each respectively having a longitudinal axis congruent with the first central axis (x) of the reaction chamber and extending from an upstream end to a downstream end which is in fluid connection with a nozzle (5), and the lumen (15) of the third fluid conduit having an upstream and downstream end, the upstream end being congruent with the fluid outlet (6) of the reaction chamber. The first and the second fluid conduit are thus arranged in the reactor for conducting a first fluid to the first fluid inlet and a second fluid to the second fluid inlet, and the third fluid conduit is arranged for conducting a third fluid from the fluid outlet in a downstream direction, the third fluid being formed by the mixture or reaction of the first and the second fluid in the reaction chamber.

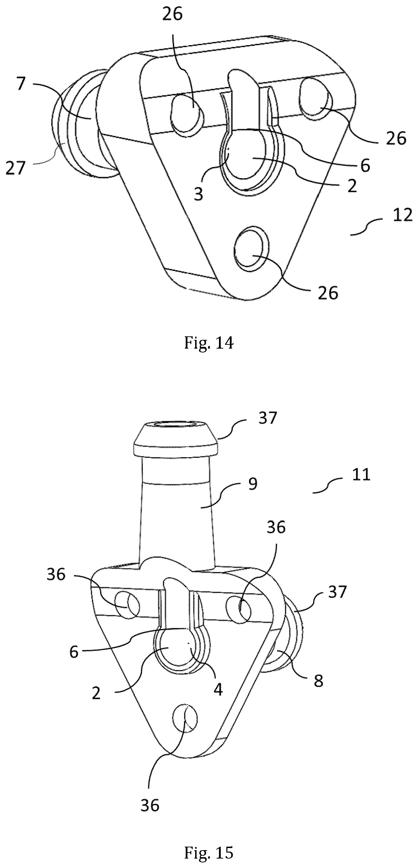

Figure 14 depicts a perspective view of the second piece of housing (12), not drawn to scale, corresponding to the housing (10) of the alternative jet impingement reactor (1) as described in Figure 13. The second housing piece (12) comprises the first fluid conduit (7), and about half of the wall forming the reaction chamber (2), the shape of which is hemispherical with interruption only by the fluid inlet (3) and about half of the fluid outlet (6). The housing (12) further comprises the first fluid conduit (7), which has a connector (27) at its upstream end, and a plurality of fastening means (26), such as in the form of a cavity which is adapted or shaped for receiving a complementary or corresponding fastening means such as a screws, or a push- or snap-fit peg (not depicted), for affixing the housing piece to the first piece of housing (11, not depicted).

Fastening means, if presented in plurality such as depicted in this Figure and subsequent Figures for affixing the two housing pieces together are not to be understood as being only limited to, or representative necessarily of the same, or single type of fastening means. Instead, as contemplated herein, the fastening means or configurations at each of the indicated positions may be independently selected or configured, and in some embodiments, different means at each of the positions may be used. Likewise, the connector as depicted in this Figure, and also in any of the subsequent Figures is to be understood as being exemplary, and not limited to the depicted shape and form. Instead, it will be appreciated that the selection of the connector and at each location may be independently adapted in accordance with requirements or preferences for connecting the fluid conduits and fluid outlet to other components, means, or apparatus that may be relevant to the use and operation of the impingement jet reactor.

Figure 15 depicts a perspective view of the first piece of housing (11), which is not drawn to scale, of the housing (10) of the alternative jet impingement reactor (1) as described in Figure 13. As depicted, the first housing piece (11) provides about half of the reaction chamber (2) wall, the shape of which is hemispherical with interruption only by the fluid inlet (4) and about half of the fluid outlet (6). The housing (11) further comprises the third fluid conduit (9), with a shaped feature in the form of a connector (37) at its downstream end, and the second fluid conduit (8). As depicted, the second fluid conduit (8) also comprises a shaped connector (37) arranged at its upstream end. Further depicted are fastening means (36), such as in the form of a cavity shaped or adapted for receiving a complementary fastening means (not depicted) such as a screw or a press- or snap-fit feature such as a peg, for the affixing of the housing to second piece of housing (12, not depicted).

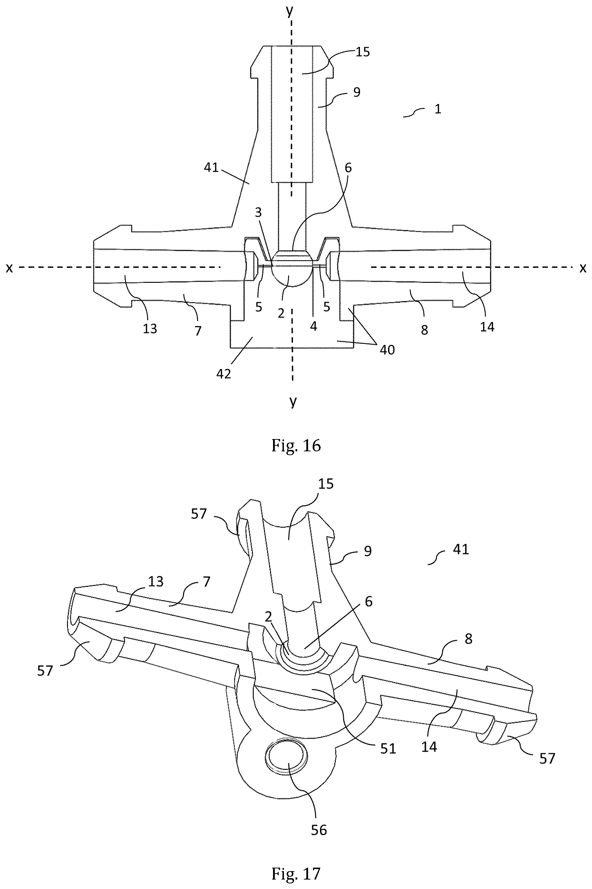

Figure 16 depicts a cross-sectional view, which is not drawn to scale, of another example of an alternative jet impingement reactor (1) comprising a housing (40) made of a polymeric material, the housing consisting of two pieces (41, 42) that are affixed to each other. The first piece of the housing (41) comprises a major portion of each of the first (7) and the second fluid conduit (8), which major portions exclude the downstream ends of the conduits; and further comprises the entire third fluid conduit (9) and a minor portion of the wall of the reaction chamber (2) which includes the fluid outlet (6). The first piece of housing (41) is shaped to comprise a void adapted to receive the second piece by insertion. As depicted, the second housing piece (42) is shaped to fit and is inserted in the first housing piece (41). The second piece of the housing (42) comprises the downstream ends of the first (7) and the second fluid conduit (8) and the respective fluid inlets (3, 4), and nozzles (5) as well as a major portion of the wall of the reaction chamber (2). The first (3) and the second fluid inlet (4) are arranged at opposite positions on a first central axis (x) of the reaction chamber (2) formed by the insertion and affixation of second housing piece (42) into the first housing piece (41) The fluid outlet (6) is arranged at a position located on a second central axis (y) of the reaction chamber which is perpendicular to the first central axis (x). The first (7), a second (8) and a third fluid conduit (9), each have respectively a lumen, the lumen of the first (13) and second fluid conduit (14) respectively having a longitudinal axis congruent with the first central axis (x) of the reaction chamber and extending from an upstream end to a downstream end which is in fluid connection with a nozzle (5), and the lumen (15) of the third fluid conduit having an upstream and downstream end, the upstream end being congruent with the fluid outlet (6) of the reaction chamber. The first and the second fluid conduit are thus arranged in the reactor for conducting a first fluid to the first fluid inlet and a second fluid to the second fluid inlet, and the third fluid conduit is arranged for conducting a third fluid from the fluid outlet in a downstream direction, the third fluid being formed by the mixture or reaction of the first and the second fluid in the reaction chamber.

Figure 17 depicts a perspective and cross-sectional view, not drawn to scale, of the first housing piece (41) as described in Figure 16. The housing piece (41) comprises a major portion of each of the first (7) and the second fluid conduit (8), which major portions exclude the downstream ends of the conduits; and further comprises the entire third fluid conduit (9) and a minor portion of the wall of the reaction chamber (2) which includes the fluid outlet (6). As depicted the housing (41) comprises a void shaped and adapted to receive the second housing piece (42, not depicted) the shaping also providing an insertion guide (51) for insertion of the second housing piece at an intended and specific orientation, relative to said first housing piece (41) to form the housing (40). The lumen (13, 14, 15) respectively of the first (7), second (8) and third (9) fluid conduits are cylindrical. The first and second conduits (7, 8) also comprise connectors (57) which facilitate further connection to correspondingly shaped feature, such as the end of a tube or another connector. The housing piece (41) also comprises a fastening means (56) in the form of a cavity adapted or shaped for receiving a complementary fastening means (not depicted), such as a screw, or a press-fit or snap-fit peg, which may be used for affixation of the first housing piece (41) to the second housing piece (42, not shown).

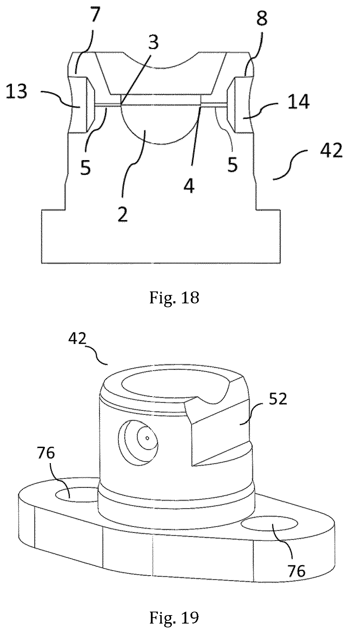

Figure 18 depicts a cross-sectional view of the second housing piece (42) of the housing (40) as shown in Figure 16. The housing piece (42) comprises the downstream ends of the first (7) and the second fluid conduit (8), and the respective fluid inlets (3, 4), and nozzles (5) as well as a major portion of the wall of the reaction chamber (2). As used herein, a major portion of the reaction chamber wall means greater than 50% of the surface area of the reaction chamber wall. The nozzles (5) are monolithically coherent with the housing piece, and the diameter of the fluid inlet (3) and fluid inlet (4) are different, although in other embodiments, the diameters of the fluid inlet (3) and (4) may be the same.

Figure 19 depicts a perspective view of the second housing piece (42) of the housing (40) as shown in Figure 16. The housing piece (42) is shaped to be insertable into the first housing piece (41, not depicted), the shaping also providing an insertion guide (52) allowing for the insertion of this piece only at a specific orientation, relative to said first housing piece (41) to form the housing (40). The housing (42) also comprises fastening means (76) in the form of a cavity adapted or shaped to receive a complementary fastening means, such as a screw, or a press- or snap-fit peg for the affixation of the two housing pieces together to form the housing (40) of the jet impingement reactor (1).

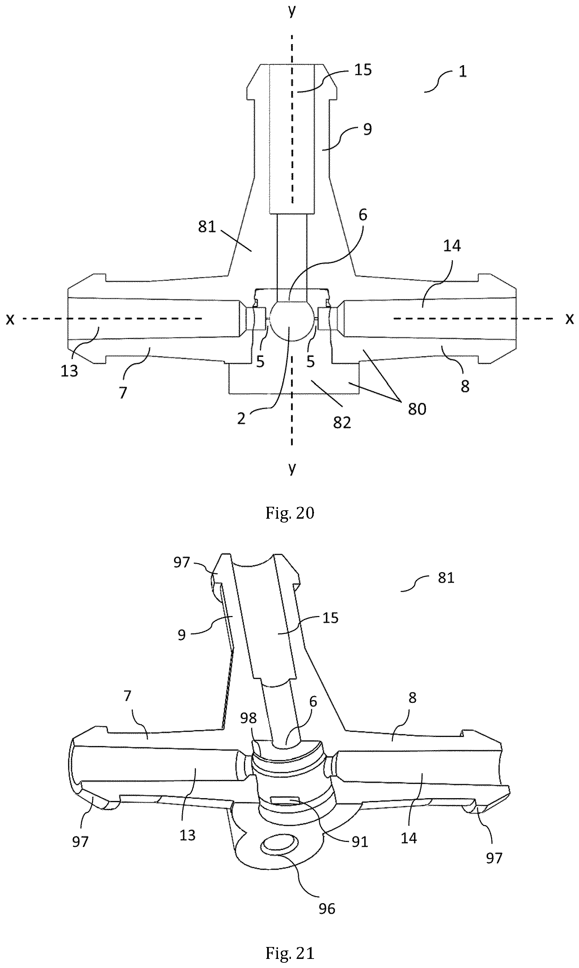

Figure 20 depicts a cross-sectional view of yet another example of an alternative jet impingement reactor (1), which is not drawn to scale, comprising a housing (80), the housing consisting of two pieces (81, 82) that are affixed to each other. The first piece of the housing (81) comprises a major portion of each of the first (7) and the second fluid conduit (8), which major portions exclude the downstream ends of the conduits; and a major portion of the third fluid conduit (9) which major portion excludes the upstream end of the conduit congruent with the fluid outlet (6) of the reaction chamber (2). The first piece of housing (81) is moreover shaped to comprise a void that is adapted to receive the second housing piece (82) by insertion. The second housing piece (82) is shaped to fit the first housing piece (81) and is inserted in the first housing piece (81). The second piece of the housing (82) comprises an entire reaction chamber (2), fluid outlet (6), and a minor portion of the upstream end of the third fluid outlet (9), and also the downstream ends of the first (7) and the second fluid conduit (8) and respective nozzles (5) with their respective fluid inlet openings (see Fig. 10). Said nozzles providing the fluid inlets are arranged at opposite positions on a first central axis (x) of the reaction chamber (2) formed by the insertion and affixation of second housing piece (82) into the first housing piece (81). The fluid outlet (6) is arranged at a position located on a second central axis (y) of the reaction chamber which is perpendicular to the first central axis (x). The first (7), a second (8) and a third fluid conduit (9), each have respectively a lumen, the lumen of the first (13) and second fluid conduit (14) respectively having a longitudinal axis congruent with the first central axis (x) of the reaction chamber and extending from an upstream end to a downstream end which is in fluid connection with a nozzle (5), and the lumen (15) of the third fluid conduit having an upstream and downstream end, the upstream end being congruent with the fluid outlet (6) of the reaction chamber (2). The first (7) and the second fluid conduit (8) are thus arranged in the reactor (1) for conducting a first fluid to the first fluid inlet and a second fluid to the second fluid inlet provided by the nozzles (5), and the third fluid conduit (9) is arranged for conducting a third fluid from the fluid outlet in a downstream direction, the third fluid being formed by the mixture or reaction of the first and the second fluid in the reaction chamber (2).

Figure 21 depicts a perspective and cross-sectional view of the first housing piece (81), which is not drawn to scale, of the housing (80) as shown in Figure 20. The first piece of the housing (81) comprises a major portion of each of the first (7) and the second fluid conduit (8), which major portions exclude the downstream ends of the conduits; and a major portion of the third fluid conduit (9) which major portion excludes the upstream end of the conduit congruent with the fluid outlet (6) of the reaction chamber (2). As depicted the housing (81) comprises a void that is shaped and adapted to receive the second housing piece (82, not depicted) the shaping also providing an insertion guide (91) for insertion of the second housing piece (82) at a specific orientation, relative to said first housing piece (81) to form the housing (80), as well as rim/groove shaping corresponding to snap-fit or press-fit features (98) allowing for affixation to the second housing piece (82). The lumina (13, 14, 15) respectively of the first (7), second (8) and third (9) fluid conduits are cylindrical. The first and second conduits (7, 8) also comprise connectors (97) which facilitate further connection to a correspondingly shaped feature, such as the end of a tube or another connector. The housing piece (81) also further comprises a fastening means (96) in the form of a cavity shaped and adapted for receiving a complementary fastening means, for example a screw, or a press- or snap-fit peg (not depicted), which may be used for affixation of the first housing piece (41) to the second housing piece (82, not shown).

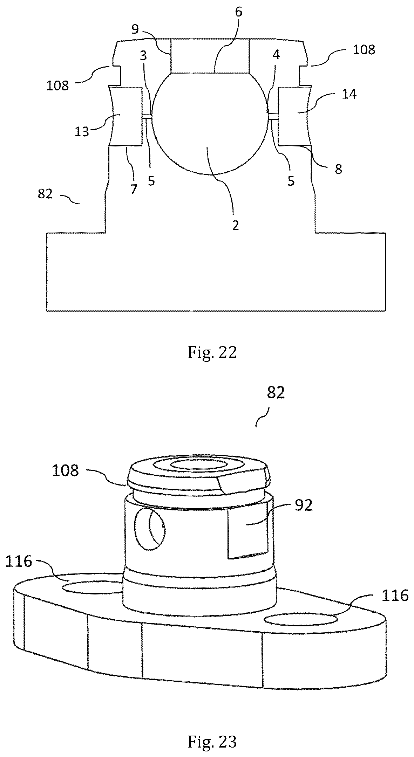

Figure 22 depicts a cross-sectional view of the second housing piece (82), which is not drawn to scale, of the reactor housing (80) as shown in Figure 20. The housing piece (82) comprises the downstream ends of the first (7) and the second fluid conduit (8), nozzles (5) and respective fluid inlets (3, 4), as an entire reaction chamber (2), the shape of which is substantially spherical, and interrupted only by the first (3) and second fluid inlets (4), and fluid outlet (6), and a minor portion (i.e. less than 50% of the fluid path length) of the upstream end of the fluid conduit (9), congruent with the fluid outlet (6). The nozzles (5) are monolithically coherent with the housing piece, and the diameter of the fluid inlet (3) and fluid inlet (4) are different, although in other embodiments, the diameters of the fluid inlet (3) and (4) may be the same. Also depicted are a snap- or press-fit feature in the form of rim and groove shaping adapted to match the corresponding feature in the first housing piece (81), for affixing (82) with the housing piece (81).

Figure 23 depicts a perspective view (not drawn to scale) of the second housing piece (82) of the housing (80) as shown in Figure 20. The housing piece (82) is shaped to be insertable into the first housing piece (81, not depicted), the shaping also providing an insertion guide (92) allowing for insertion of this piece at an intended and specific orientation, relative to said first housing piece (81) to form the housing (80). The housing piece (82) also comprises a snap- or press-fit feature (108) in the form of rim and groove shaping adapted to match the corresponding feature in the first housing piece (81), for affixing this piece with the first piece of housing (81). The housing (82) also comprises fastening means (116) e.g. in the form of a cavity adapted to receive a screw, also for affixation of the two housing pieces together to form the housing (80) of the jet impingement reactor (1).

### List of Reference Numbers

- 1: Jet impingement reactor
- 2: Reaction chamber
- 3: First fluid inlet
- 4: Second fluid inlet
- 5: Nozzle
- 6: Fluid outlet
- 7: First fluid conduit
- 8: Second fluid conduit
- 9: Third fluid conduit
- 121, 171, 181: First piece
- 132, 172, 182: Second piece
- 16: Portion of reaction chamber wall
- 21: First void
- 22: Second void
- 23: Third void
- 24: Upstream end of second piece
- 25: Downstream end of second piece
- 28: Lumen of fluid conduit
- 29a: Upstream portion of lumen
- 29b: Middle portion of lumen
- 29c: Downstream portion of lumen
- 31, 319: Planar wall portion of reaction chamber
- 32,329: Recess
- 33, 73, 83: Connecting piece
- 34, 74, 84: Upstream end of connecting piece
- 35, 75, 85: Downstream end of connecting piece
- 744, 844: Upstream portion of the connecting piece
- 755, 855: Downstream portion of the connecting piece
- 36, 76, 86: Fluid conduit of connecting piece
- 37, 77, 87: Connector or fitting of connecting piece
- 38, 78, 88: Circular groove
- 39, 79: O-ring seal
- 10, 40, 80: Housing
- 11, 41, 81: First housing piece
- 12, 42, 82: Second housing piece
- 13: Lumen of the first fluid conduit
- 14: Lumen of the second fluid conduit
- 15: Lumen of the third fluid conduit
- 51, 52, 91, 92, 109a, 109b: Insertion guide
- 26, 36, 56, 76, 96, 116: Fastening means
- 27, 37, 57, 97: Connector
- 98, 108: Snap fit or press-fit feature
- x: First central axis
- y: Second central axis

The following examples serves to illustrate the invention, however, should not be understood as restricting the scope of the invention.

### EXAMPLES

### Example 1

An impingement jet reactor according to the invention, assembled from a first and a second piece as defined in the claims and both made of a polymeric material and fitted with the connecting pieces as disclosed herein was used for the preparation of model PLGA (poly(lactic-co-glycolic acid, also referred to as polylactide-co-glycolide) nanoparticles. To assess reproducibility, three reactors (A, B and C) with the same specifications were assembled and tested. As a further control and comparison, a jet impingement reactor described in WO 2023/025736 A1, fabricated from stainless steel and with the same specifications was tested. The respective reactors were connected to an apparatus providing the containers, tubing, pumps, valves, pressure gauges, flow meters, thermometers as required to operate the reactor and produce the nanoparticles. The PLGA nanoparticles were prepared using essentially the same reactor geometries and process parameters, as shown in the table below. The dimensions provided are manufacturing specifications rather than measured values.

| **Parameters** | **Polymer Reactors A, B and C** | **Stainless Steel Reactor M** |
|---|---|---|
| Reactor chamber diameter | 3 mm | 3mm |
| Outlet diameter | 1 mm | 1 mm |
| Fluid inlet diameter (first / second) | 200 µm / 150 µm | 200 µm / 150 µm |
| Total flow rate (TFR) | 75 ml/min | 75 ml/min |
| Flow rate ratio (FRR) (first fluid : second fluid) | 4:1 | 4:1 |
| First fluid | 0.1 % polysorbate 20 in deionized water | 0.1 % polysorbate 20 in deionized water |
| Second fluid | 35 mg/mL PLGA in acetone | 35 mg/mL PLGA in acetone |

The resulting nanoparticle samples were collected and diluted immediately after production 1:1 with 0.1% polysorbate 20 (Tween^{®} 20) in deionized water to reach a 10% solvent concentration prior to the taking of dynamic light scattering (DLS) measurements to measure particle size and polydispersity index (PDI) of the particle size distribution for the nanoparticles. DLS measurements were taken at a scattering angle of 90° using a Zetasizer Nano ZS90 (Malvern Panalytical). Production runs for each of the polymeric reactors, A, B, C and comparative stainless steel reactor M were performed in triplicate.

Results: As depicted in the graphs featured in Figure 11, it was found that the polymer impingement jet reactor according to the invention resulted in PLGA nanoparticles with similar particle sizes as those produced using a stainless-steel reactor M having the same specifications and under the same conditions. The particles produced were also found to have low PDIs (polydispersity index), i.e. less than threshold value of 0.2, indicating the production of high-quality nanoparticles with narrow size distribution. Moreover, it was found that the PLGA nanoparticles obtained from the three polymer reactors A, B and C had similar nanoparticle sizes and PDIs, indicating good reproducibility and robustness in the method of producing, fitting and assembly of these reactors.

### Example 2

An impingement jet reactor according to the invention, assembled from a first and a second piece as defined in the claims and both made of a polymeric material and fitted with the connecting pieces as defined according to the invention was used for the preparation of model liposomal nanoparticles. Compared to the model PLGA particles which were prepared in Example 1, liposomes are more complex in that they represent spheroidal vesicles composed of amphiphilic lipids which contain at least one lipid bilayer usually surrounding an aqueous core.

To assess reproducibility, three reactors (A, B and C - not the same specimens as used in Example 1) with the same specifications were assembled and tested for the production of liposomes. As a further control and comparison, a jet impingement reactor described in WO 2023/025736 A1, made of stainless steel and having the same specifications was also tested in parallel. The respective reactors were connected to an apparatus providing the containers, tubing, pumps, valves, pressure gauges, flow meters, thermometers required to operate the reactor and produce the nanoparticles. The liposomes were prepared using essentially the same reactor geometries and process parameters, as shown in the table below. Again, the dimensions provided are manufacturing specifications rather than measured values:

| **Parameters** | **Polymer Reactors A, B and C** | **Stainless Steel Reactor M** |
|---|---|---|
| Reactor chamber diameter | 3 mm | 3mm |
| Outlet diameter | 1 mm | 1 mm |
| Fluid inlet diameter (first / second) | 200 µm / 150 µm | 200 µm / 150 µm |
| Total flow rate (TFR) | 90 ml/min | 90 ml/min |
| Flow rate ratio (FRR) (first fluid : second fluid) | 2:1 | 2 : 1 |
| First fluid | 10 mM PBS, pH 7.4 | 10 mM PBS, pH 7.4 |
| Second fluid | Soybean phosphatidylcholine Cholesterol | Soybean phosphatidylcholine |
| | DMG-PEG2000 (52/45/3 mol%) respectively in ethanol (lipid concentration 6 mg/mL) | Cholesterol DMG-PEG2000 (52/45/3 mol%) respectively in ethanol (lipid concentration 6 mg/mL) |

Production runs for each of the polymeric reactors, A, B, C and comparative stainless steel reactor M were performed in triplicate and at room temperature.

Liposome samples were collected and were diluted with the PBS buffer (same as Fluid 2) immediately after production to a concentration of 16.5 % ethanol in the sample prior to the taking of dynamic light scattering (DLS) measurements to measure particle size and polydispersity index (PDI) of the particle size. The DLS measurements were conducted within 10 or less minutes following collection and dilution of the samples, and DLS measurements were taken at a scattering angle of 173° Zetasizer Ultra (Malvern Panalytical).

Results: As depicted in the graphs featured in Figure 12, it was found that the polymeric impingement jet reactor according to the invention resulted in liposome nanoparticles with similar small particle sizes as those produced using a stainless-steel reactor M having the same specifications and under the same conditions. The particles produced were also found to have low PDI (polydispersity index) of less than 0.1, indicating the production of high-quality nanoparticles with very narrow size range distribution. Moreover, it was found that the liposomal nanoparticles produced by each of the individual three polymer reactors A, B and C had similar nanoparticle sizes and PDIs, indicating good reproducibility as well as robustness with respect to the manufacture, fit and assembly of the reactor pieces.

## Claims

1. A jet impingement reactor (1) comprising a reaction chamber (2), said chamber (2) having a substantially spherical shape, wherein the spherical shape is interrupted by:
(a) a first (3) and a second (4) fluid inlet, wherein the first (3) and the second (4) fluid inlet are arranged at opposite positions on a first central axis (x) of the reaction chamber (2) such as to point at one another, and wherein each of the first (3) and the second (4) fluid inlet is provided by a nozzle (5); and
(b) a fluid outlet (6) arranged at a position located on a second central axis (y) of said chamber (2), the second central axis (y) being perpendicular to the first central axis (x);
the reactor (1) further comprising a first (7), a second (8) and a third(9) fluid conduit, wherein the first (7) and the second (8) fluid conduit are arranged for conducting a first fluid to the first fluid inlet (3) and a second fluid to the second fluid inlet (4), and wherein the third fluid conduit (9) is arranged for conducting a third fluid from the fluid outlet (6) in a downstream direction, the third fluid being formed by the mixture or reaction of the first and the second fluid in the reaction chamber (2);
wherein the reactor (1) comprises at least two pieces that are affixed to each other, of which a first piece (121, 171, 181) is made of a polymeric material and comprises at least a portion of the first (7) or the second (8) fluid conduit and at least a hemispherical portion of the reaction chamber (2); and a second piece (132, 172, 182), the second piece (132, 172, 182) comprising the fluid outlet (6),
**characterized in that** the second piece (132, 172, 182) is at least partially insertable into the first piece (121, 171, 181).

2. The reactor (1) of claim 1, wherein the first piece (121, 171, 181) is shaped to comprise a first void (21) for receiving the second piece (132, 172, 182) by insertion, and wherein the second piece (132, 172, 182) is shaped and adapted to be insertable into the first void.

3. The reactor (1) of any preceding claim, wherein the second piece (132, 172, 182) comprises
- an upstream end (24) comprising the fluid outlet (6) and a portion of the reaction chamber (2);
- a downstream end (25); and
- the third fluid conduit (9) which fluidically connects the upstream end (24) with the downstream end (25).

4. The reactor (1) of any preceding claim, wherein the first (7) and the second (8) fluid conduit each have a longitudinal central axis which is congruent with the first central axis (x) of the reaction chamber (2), and wherein the third fluid conduit (9) has a longitudinal central axis which is congruent with the second central axis (y) of the reaction chamber (2).

5. The reactor (1) of any preceding claim, wherein the first (7) and/or the second (8) fluid conduit has a lumen (13, 14, 28) with an upstream portion (29a) and a downstream portion (29c), wherein the upstream portion (29a) is cylindrical or cylindroidal and exhibits a substantially larger diameter than the downstream portion (29c).

6. The reactor of claim 5, wherein the downstream portions (29c) of the first (7) and the second (8) fluid conduit each taper towards a respective downstream end thereof, which forms or is congruent with the first (3) and the second (4) fluid inlet, respectively.

7. The reactor (1) of any preceding claim, wherein the first (7) and/or the second (8) fluid conduit has a lumen (13, 14, 28) with an upstream portion (29a) and a downstream portion (29c), and wherein the lumen (13, 14, 28) of each of the first (7) and the second (8) fluid conduit further comprises a middle portion (29b) between the upstream (29a) and the downstream portion (29c), wherein the middle portion (29b) is tapered towards the downstream portion (29c).

8. The reactor of claim 7, wherein the tapered middle portion (29b) and the tapered downstream portion (29c) exhibit different taper angles.

9. The reactor (1) of any one of claims 5 to 8, wherein the nozzle (5) providing the first (3) or the second (4) fluid inlet is a) monolithically coherent with the first piece (121, 171, 181) of the reactor, or is b) an insert made of metal.

10. The reactor (1) of any preceding claim, wherein the first (3) and the second (4) fluid inlet have a diameter in the range from about 50 µm to about 600 µm, and/or wherein the diameter of the first fluid inlet (3) is different from the diameter of the second fluid inlet (4).

11. The reactor (1) of any preceding claim, wherein the spherical shape of the reaction chamber (2) is only interrupted by the first (3) and the second (4) fluid inlet and the fluid outlet (6).

12. The reactor (1) of any one of claims 1 to 10, wherein the spherical shape of the reaction chamber (2) is only interrupted by the first (3) and the second (4) fluid inlet, the fluid outlet (6), and a planar wall portion (31, 319) having an area that is smaller than the area of the fluid outlet.

13. The reactor (1) of claim 12, wherein the planar wall portion (31, 319) is provided by the first piece (121, 171, 181) as a protrusion of said first piece (121, 171, 181), and wherein the second piece (132, 172, 182) exhibits a recess (32, 329) for receiving said protrusion.

14. The reactor (1) of any one of claims 1 to 10, wherein the spherical shape of the reaction chamber (2) is only interrupted by the first (3) and the second (4) fluid inlet, the fluid outlet (6), and at least two planar wall portions (31, 319) each independently having an area that is smaller than the area of the fluid outlet (6), wherein the first planar wall portion (31, 319) and the second planar wall portion (31, 319) are arranged at opposite positions on the first central axis (x) of the reaction chamber (2).

15. The reactor of claim 14, wherein the at least two planar wall portions (31, 319) are provided by the first piece (121, 171, 181) as protrusions of said first piece ( 121, 171, 181), and wherein the second piece (132, 172, 182) exhibits a first and a second recess (32, 329) adapted for receiving said protrusions.

## Patentansprüche

1. Strahlaufprallreaktor (1) umfassend eine Reaktionskammer (2), wobei die Kammer (2) eine im Wesentlichen kugelförmige Gestalt aufweist, wobei die kugelförmige Gestalt unterbrochen ist durch:
(a) einen ersten (3) und einen zweiten (4) Fluideinlass, wobei der erste (3) und der zweite (4) Fluideinlass an gegenüberliegenden Positionen auf einer ersten Mittelachse (x) der Reaktionskammer (2) so angeordnet sind, dass sie aufeinander zeigen, und wobei sowohl der erste (3) als auch der zweite (4) Fluideinlass durch eine Düse (5) gebildet wird; und
(b) einen Fluidauslass (6), der an einer Position auf einer zweiten Mittelachse (y) der Kammer (2) angeordnet ist, wobei die zweite Mittelachse (y) senkrecht zur ersten Mittelachse (x) steht;
wobei der Reaktor (1) ferner eine erste (7), eine zweite (8) und eine dritte (9) Fluidleitung umfasst, wobei die erste (7) und die zweite (8) Fluidleitung dazu angeordnet sind, ein erstes Fluid zum ersten Fluideinlass (3) und ein zweites Fluid zum zweiten Fluideinlass (4) zu leiten, und wobei die dritte Fluidleitung (9) dazu angeordnet ist, ein drittes Fluid vom Fluidauslass (6) in einer stromabwärtigen Richtung zu leiten, wobei das dritte Fluid durch die Mischung oder Reaktion des ersten und des zweiten Fluids in der Reaktionskammer (2) gebildet wird;
wobei der Reaktor (1) mindestens zwei miteinander verbundene Teile umfasst, von denen ein erstes Teil (121, 171, 181) aus einem polymeren Material besteht und mindestens einen Abschnitt der ersten (7) oder der zweiten (8) Fluidleitung und mindestens einen halbkugelförmigen Abschnitt der Reaktionskammer (2) umfasst; und ein zweites Teil (132, 172, 182), wobei das zweite Teil (132, 172, 182) den Fluidauslass (6) umfasst, **dadurch gekennzeichnet, dass** das zweite Teil (132, 172, 182) zumindest teilweise in das erste Teil (121, 171, 181) eingesetzt werden kann.

2. Reaktor (1) nach Anspruch 1, wobei das erste Teil (121, 171, 181) so geformt ist, dass es einen ersten Hohlraum (21) zur Aufnahme des zweiten Teils (132, 172, 182) durch Einführen umfasst, und wobei das zweite Teil (132, 172, 182) so geformt und angepasst ist, dass es in den ersten Hohlraum eingeführt werden kann.

3. Reaktor (1) nach einem der vorhergehenden Ansprüche, wobei das zweite Teil (132, 172, 182) umfasst
- ein stromaufwärtiges Ende (24) umfassend den Fluidauslass (6) und ein Teil der Reaktionskammer (2);
- ein stromabwärtiges Ende (25); und
- die dritte Fluidleitung (9), die das stromaufwärtige Ende (24) mit dem stromabwärtigen Ende (25) fluidisch verbindet.

4. Reaktor (1) nach einem der vorhergehenden Ansprüche, wobei die erste (7) und die zweite (8) Fluidleitung jeweils eine Längsmittelachse aufweisen, die mit der ersten Mittelachse (x) der Reaktionskammer (2) kongruent ist, und wobei die dritte Fluidleitung (9) eine Längsmittelachse aufweist, die mit der zweiten Mittelachse (y) der Reaktionskammer (2) kongruent ist.

5. Reaktor (1) nach einem der vorhergehenden Ansprüche, wobei die erste (7) und/oder die zweite (8) Fluidleitung ein Lumen (13, 14, 28) mit einem stromaufwärtigen Abschnitt (29a) und einem stromabwärtigen Abschnitt (29c) aufweist, wobei der stromaufwärtige Abschnitt (29a) zylindrisch oder zylinderähnlich ist und einen wesentlich größeren Durchmesser als der stromabwärtige Abschnitt aufweist (29c) aufweist.

6. Reaktor nach Anspruch 5, wobei sich die stromabwärtigen Abschnitte (29c) der ersten (7) und der zweiten (8) Fluidleitung jeweils zu ihrem jeweiligen stromabwärtigen Ende hin verjüngen, das den ersten (3) bzw. den zweiten (4) Fluideinlass bildet oder mit diesem kongruent ist.

7. Reaktor (1) nach einem der vorhergehenden Ansprüche, wobei die erste (7) und/oder die zweite (8) Fluidleitung ein Lumen (13, 14, 28) mit einem stromaufwärtigen Abschnitt (29a) und einem stromabwärtigen Abschnitt (29c) aufweist und wobei das Lumen (13, 14, 28) sowohl der ersten (7) als auch der zweiten (8) Fluidleitung ferner einen mittleren Abschnitt (29b) zwischen dem stromaufwärtigen (29a) und dem stromabwärtigen Abschnitt (29c) aufweist, wobei der mittlere Abschnitt (29b) sich zum stromabwärtigen Abschnitt (29c) hin verjüngt.

8. Reaktor nach Anspruch 7, wobei der sich verjüngende mittlere Abschnitt (29b) und der sich verjüngende stromabwärtige Abschnitt (29c) unterschiedliche Verjüngungswinkel aufweisen.

9. Reaktor (1) nach einem der Ansprüche 5 bis 8, wobei die Düse (5), die den ersten (3) oder den zweiten (4) Fluideinlass bildet, a) monolithisch mit dem ersten Teil (121, 171, 181) des Reaktors verbunden ist oder b) ein Einsatz aus Metall ist.

10. Reaktor (1) nach einem der vorhergehenden Ansprüche, wobei der erste (3) und der zweite (4) Fluideinlass einen Durchmesser im Bereich von etwa 50 µm bis etwa 600 µm aufweisen und/oder wobei der Durchmesser des ersten Fluideinlasses (3) sich vom Durchmesser des zweiten Fluideinlasses (4) unterscheidet.

11. Reaktor (1) nach einem der vorhergehenden Ansprüche, wobei die Kugelform der Reaktionskammer (2) nur durch den ersten (3) und den zweiten (4) Fluideinlass und den Fluidauslass (6) unterbrochen ist.

12. Reaktor (1) nach einem der Ansprüche 1 bis 10, wobei die Kugelform der Reaktionskammer (2) nur durch den ersten (3) und den zweiten (4) Fluideinlass, den Fluidauslass (6) und einen ebenen Wandabschnitt (31, 319) mit einer Fläche, die kleiner ist als die Fläche des Fluidauslasses, unterbrochen ist.

13. Reaktor (1) nach Anspruch 12, wobei der ebene Wandabschnitt (31, 319) durch das erste Teil (121, 171, 181) als ein Vorsprung des ersten Teils (121, 171, 181) vorgesehen ist, und wobei das zweite Teil (132, 172, 182) eine Aussparung (32, 329) zur Aufnahme des Vorsprungs aufweist.

14. Reaktor (1) nach einem der Ansprüche 1 bis 10, wobei die Kugelform der Reaktionskammer (2) nur durch den ersten (3) und den zweiten (4) Fluideinlass , den Fluidauslass (6) und mindestens zwei ebene Wandabschnitte (31, 319), die jeweils unabhängig eine Fläche aufweisen, die kleiner ist als die Fläche des Fluidauslasses (6), wobei der erste ebene Wandabschnitt (31, 319) und der zweite ebene Wandabschnitt (31, 319) an gegenüberliegenden Positionen auf der ersten Mittelachse (x) der Reaktionskammer (2) angeordnet sind.

15. Reaktor nach Anspruch 14, wobei die mindestens zwei ebenen Wandabschnitte (31, 319) durch das erste Teil (121, 171, 181) als Vorsprünge des ersten Teils (121, 171, 181) vorgesehen sind und wobei das zweite Teil (132, 172, 182) eine erste und eine zweite Aussparung (32, 329) aufweist, die zur Aufnahme der Vorsprünge angepasst sind.

## Revendications

1. Réacteur à injection de jet (1) comprenant une chambre de réaction (2), ladite chambre (2) ayant une forme sensiblement sphérique, la forme sphérique étant interrompue par :
(a) une première (3) et une deuxième (4) entrée de fluide, la première (3) et la deuxième (4) entrée de fluide étant disposées à des positions opposées sur un premier axe central (x) de la chambre de réaction (2) de manière à pointer l'une vers l'autre, et la première (3) et la deuxième (4) entrée de fluide étant chacune pourvue d'une buse (5) ; et
(b) une sortie de fluide (6) disposée à une position située sur un deuxième axe central (y) de ladite chambre (2), le deuxième axe central (y) étant perpendiculaire au premier axe central (x) ;
le réacteur (1) comprenant en outre un premier (7), un deuxième (8) et un troisième (9) conduit de fluide, le premier (7) et le deuxième (8) conduit de fluide étant prévus pour conduire un premier fluide vers la première entrée de fluide (3) et un deuxième fluide vers la deuxième entrée de fluide (4), et le troisième conduit de fluide (9) étant prévu pour conduire un troisième fluide depuis la sortie de fluide (6) vers l'aval, le troisième fluide étant formé par le mélange ou la réaction du premier et du deuxième fluide dans la chambre de réaction (2) ;
le réacteur (1) comprenant au moins deux pièces qui sont fixées l'une à l'autre, dont une première pièce (121, 171, 181) est en une matière polymère et comprend au moins une partie du premier (7) ou du deuxième (8) conduit de fluide et au moins une partie hémisphérique de la chambre de réaction (2) ; et une deuxième pièce (132, 172, 182), la deuxième pièce (132, 172, 182) comprenant la sortie de fluide (6),
**caractérisé en ce que** la deuxième pièce (132, 172, 182) est au moins partiellement insérable dans la première pièce (121, 171, 181),.

2. Réacteur (1) selon la revendication 1, la première pièce (121, 171, 181) étant conformée pour comprendre un premier vide (21) destiné à recevoir la deuxième pièce (132, 172, 182) par insertion, et la deuxième pièce (132, 172, 182) étant conformée et adaptée pour être insérable dans le premier vide.

3. Réacteur (1) selon l'une quelconque des revendications précédentes, la deuxième pièce (132, 172, 182) comprenant
- une extrémité amont (24) comprenant la sortie de fluide (6) et une partie de la chambre de réaction (2) ;
- une extrémité aval (25) ; et
- le troisième conduit de fluide (9) qui relie fluidiquement l'extrémité amont (24) à l'extrémité aval (25).

4. Réacteur (1) selon l'une quelconque des revendications précédentes, le premier (7) et le deuxième (8) conduit de fluide ayant chacun un axe central longitudinal qui est congruent avec le premier axe central (x) de la chambre de réaction (2), et le troisième conduit de fluide (9) ayant un axe central longitudinal qui est congruent avec le deuxième axe central (y) de la chambre de réaction (2).

5. Réacteur (1) selon l'une quelconque des revendications précédentes, le premier (7) et/ou le deuxième (8) conduit de fluide comportant une lumière (13, 14, 28) pourvue d'une partie amont (29a) et d'une partie aval (29c), la partie amont (29a) ayant la forme d'un cylindre ou d'un cylindroïde et présentant un diamètre sensiblement plus grand que celui de la partie aval (29c).

6. Réacteur selon la revendication 5, les parties aval (29c) du premier (7) et du deuxième (8) conduit de fluide présentant chacune une conicité en direction d'une extrémité aval respective de celui-ci, qui forme ou est congruente avec la première (3) et la deuxième (4) entrée de fluide, respectivement.

7. Réacteur (1) selon l'une quelconque des revendications précédentes, le premier (7) et/ou le deuxième (8) conduit de fluide comportant une lumière (13, 14, 28) pourvue d'une partie amont (29a) et d'une partie aval (29c), et la lumière (13, 14, 28) de chacun des premier (7) et deuxième (8) conduits de fluide comprenant en outre une partie médiane (29b) entre la partie amont (29a) et la partie aval (29c), la partie médiane (29b) présentant une conicité en direction de la partie aval (29c).

8. Réacteur selon la revendication 7, la partie médiane conique (29b) et la partie aval conique (29c) présentant des angles de conicité différents.

9. Réacteur (1) selon l'une quelconque des revendications 5 à 8, la buse (5) qui fournit la première (3) ou la deuxième (4) entrée de fluide étant a) cohérente de manière monolithique avec la première pièce (121, 171, 181) du réacteur , ou est b) un insert en métal.

10. Réacteur (1) selon l'une quelconque des revendications précédentes, la première (3) et la deuxième (4) entrée de fluide ayant un diamètre dans la gamme allant d'environ 50 µm à environ 600 µm , et/ou le diamètre de la première entrée de fluide (3) étant différent du diamètre de la deuxième entrée de fluide (4).

11. Réacteur (1) selon l'une quelconque des revendications précédentes, la forme sphérique de la chambre de réaction (2) n'étant interrompue que par la première (3) et la deuxième (4) entrée de fluide et la sortie de fluide (6).

12. Réacteur (1) selon l'une quelconque des revendications 1 à 10, la forme sphérique de la chambre de réaction (2) étant uniquement interrompue par la première (3) et la deuxième (4) entrée de fluide, la sortie de fluide (6) et une partie de paroi plane (31, 319) ayant une surface qui est plus petite que la surface de la sortie de fluide.

13. Réacteur (1) selon la revendication 12, la partie de paroi plane (31, 319) étant fournie par la première pièce (121, 171, 181) en tant que saillie de ladite première pièce (121, 171, 181), et la deuxième pièce (132, 172, 182) présentant un évidement (32, 329) destiné à recevoir ladite saillie.

14. Réacteur (1) selon l'une quelconque des revendications 1 à 10, la forme sphérique de la chambre de réaction (2) étant seulement interrompue par la première (3) et la deuxième (4) entrée de fluide, la sortie de fluide (6) et au moins deux parties de paroi planes (31, 319) ayant chacune indépendamment une surface qui est plus petite que la surface de la sortie de fluide (6), la première partie de paroi plane (31, 319) et la deuxième partie de paroi plane (31, 319) étant disposées à des positions opposées sur le premier axe central (x) de la chambre de réaction (2).

15. Réacteur selon la revendication 14, les au moins deux parties de paroi planes (31, 319) étant fournies par la première pièce (121, 171, 181) en tant que saillies de ladite première pièce (121, 171, 181), et la deuxième pièce (132, 172, 182) présentant un premier et un deuxième évidement (32, 329) adaptés pour recevoir lesdites saillies.
